(19) **Europäisches Patentamt / European Patent Office / Office européen des brevets**

(11) **EP 2 983 364 A1**

(12) # EUROPEAN PATENT APPLICATION
published in accordance with Art. 153(4) EPC

(43) Date of publication:
**10.02.2016 Bulletin 2016/06**

(51) Int Cl.:
**H04N 19/30** (2014.01)

(21) Application number: **14779576.9**

(22) Date of filing: **07.04.2014**

(86) International application number:
**PCT/KR2014/003008**

(87) International publication number:
**WO 2014/163463 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.04.2013 US 201361808854 P**

(71) Applicant: **Samsung Electronics Co., Ltd.**
**Gyeonggi-do 16677 (KR)**

(72) Inventors:
• **CHOI, Byeong-doo**
**Suwon-si**
**Gyeonggi-do 443-725 (KR)**

• **PARK, Min-woo**
**Hwaseong-si**
**Gyeonggi-do 445-762 (KR)**
• **WEY, Ho-cheon**
**Seongnam-si**
**Gyeonggi-do 463-705 (KR)**
• **YOON, Jae-won**
**Seoul 138-891 (KR)**
• **LEE, Jin-young**
**Hwaseong-si**
**Gyeonggi-do 445-828 (KR)**
• **CHO, Yong-jin**
**Seoul 133-771 (KR)**

(74) Representative: **Appleyard Lees**
**15 Clare Road**
**Halifax HX1 2HY (GB)**

(54) **MULTI-LAYER VIDEO CODING METHOD AND DEVICE, AND MULTI-LAYER VIDEO DECODING METHOD AND DEVICE**

(57) Methods and apparatuses for coding and decoding a multi-layer video are provided. The multi-layer video coding method comprises generating network abstraction layer (NAL) units for each data unit by dividing a multi-layer video according to data units, and adding scalable information to a video parameter set (VPS) NAL UNIT from among pieces of transmission unit data for each data unit.

**FIG. 1**

EP 2 983 364 A1

**Description**

TECHNICAL FIELD

The present invention relates to methods and apparatuses of coding and decoding a multi-layer video, such as a scalable video or a multi-view video, and more particularly, a high-level syntax structure for signaling a multi-layer video.

BACKGROUND ART

Generally, image data is encoded according to a designated data compression standard, e.g., a moving picture expert group (MPEG) compression standard, and is stored in a data storage medium or is transmitted via a communication channel in the form of bit streams.

Scalable video encoding (SVC) is a video compression method for suitably adjusting a data amount and transmitting data in correspondence to various types of communication networks and terminals. In SVC, a video encoding method capable of adaptively providing a service to various transmission networks and various reception terminals by using a single video stream is provided.

With recent spreads of three-dimensional (3D) multi-media apparatuses and 3D multi-media content, multi-view video coding (MVC) for 3D video coding is being widely used.

In conventional SVC and MVC, video is encoded according to a limited-encoding method based on a macroblock having a predetermined size.

DETAILED DESCRIPTION OF THE INVENTION

TECHNICAL PROBLEM

The present invention provides coding and decoding methods that improve coding efficiency.

TECHNICAL SOLUTION

According to an aspect of the present invention, there is provided an image decoding method of decoding a multi-layer video, the method including obtaining a layer identifier (ID) of at least one decoding-target layer image from a multi-layer video bitstream; obtaining, from the bitstream, a flag indicating whether scalability information has been included in the layer ID; obtaining at least one type of scalability information from among a plurality of different types of scalability information from the layer ID as the flag represents that a plurality of pieces of scalability information are obtained from the layer ID; and restoring an image by decoding the decoding-target layer image by using the scalability information.

ADVANTAGEOUS EFFECTS

Due to the use of coding and decoding methods according to an embodiment of the present invention, compression efficiency is improved.

BRIEF DESCRIPTION OF THE DRAWINGS

FIG. 1 is a block diagram of a structure of a multi-layer video coding apparatus according to an embodiment.
FIG. 2 illustrates a multi-layer video according to an embodiment.
FIG. 3 illustrates network abstraction layer (NAL) units including encoded data of a multi-layer video according to an embodiment.
FIGS. 4A and 4B illustrate an example of a header of an NAL unit according to an embodiment.
FIG.5 shows a header of a NAL unit including a layer identifier (ID) including two types of scalability information according to an embodiment.
FIG.6 shows a header of a NAL unit including a layer ID including three types of scalability information according to an embodiment.
FIG. 7 shows a split dimension ID table according to an embodiment.
FIG. 8 shows a dimension ID table according to an embodiment.

FIG. 9 is a flowchart of a multi-layer video coding method according to an embodiment.

FIG. 10 is a block diagram of a structure of a multi-layer video decoding apparatus according to an embodiment.

FIG. 11 is a flowchart of a multi-layer video decoding method according to an embodiment.

FIGS. 12A and 12B illustrate a video parameter set (VPS) extension syntax for signaling between a coding apparatus and a decoding apparatus according to an embodiment of the present invention.

FIG. 13 is a block diagram of a video coding apparatus based on coding units having a tree structure, according to an embodiment of the present invention.

FIG. 14 is a block diagram of a video decoding apparatus based on coding units having a tree structure, according to an embodiment of the present invention.

FIG. 15 is a diagram for describing a concept of a coding unit according to an embodiment of the present invention.

FIG. 16 is a block diagram of an image encoder based on a coding unit, according to an embodiment of the present invention.

FIG. 17 is a block diagram of an image decoder based on a coding unit, according to an embodiment of the present invention.

FIG. 18 is a diagram illustrating deeper coding units according to depths, and partitions, according to an embodiment of the present invention.

FIG. 19 is a diagram for describing a relationship between a coding unit and transformation units, according to an embodiment of the present invention.

FIG. 20 is a diagram for describing coding information according to depths, according to an embodiment of the present invention.

FIG. 21 is a diagram of deeper coding units according to depths, according to an embodiment of the present invention.

FIGS. 22-24 are diagrams for describing a relationship between coding units, prediction units, and transformation units, according to an embodiment of the present invention.

FIG. 25 is a diagram for describing a relationship between a coding unit, a prediction unit, and a transformation unit, according to encoding mode information of Table 5.

BEST MODE

According to an aspect of the present invention, there is provided an image decoding method of decoding a multi-layer video, the method including obtaining a layer identifier (ID) of at least one decoding-target layer image from a multi-layer video bitstream; obtaining, from the bitstream, a flag indicating whether scalability information has been included in the layer ID; obtaining at least one type of scalability information from among a plurality of different types of scalability information from the layer ID as the flag represents that a plurality of pieces of scalability information are obtained from the layer ID; and restoring an image by decoding the decoding-target layer image by using the scalability information.

The obtaining of the scalability information may include generating scalability information from a portion of an expression of the layer ID when the value of the flag is 1.

The decoding-target layer image may include a plurality of pieces of scalability information, and an expression of the layer ID may include, as a portion of the expression, dimension IDs representing scalability dimensions for a plurality of scalability types.

The decoding-target layer image may include a plurality of pieces of scalability information, and the plurality of pieces of scalability information may be continued as ID parts in a binary form and included in a binary expression of the layer ID.

The obtaining of the scalability information may include obtaining, from the bitstream, a syntax indicating the number of types of scalability information included in the layer ID; and obtaining scalability information of the decoding-target layer image from the layer ID by using the syntax indicating the number of types.

The obtaining of the scalability information may include obtaining, from the bitstream, a syntax indicating a bit length by which scalability information included in the layer ID occupies a binary expression of the layer ID; and obtaining scalability information of the decoding-target layer image from the layer ID by using the syntax indicating the bit length.

A length of scalability information included in the last order in the layer ID may be determined by using a length of the layer ID and lengths of pieces of scalability information except for the scalability information included in the last order in the layer ID from among pieces of scalability information included in the layer ID.

The obtaining of the scalability information may include obtaining a scalability information collection generated according to a scalability information type of the at least one decoding-target layer image and ID parts of the layer ID of the at least one decoding-target coding image, according to the value of a flag representing whether the scalability information collection is included in the bitstream; and obtaining scalability information of the decoding-target layer image by using the scalability information collection.

According to an aspect of the present invention, there is provided an image coding method of coding a multi-layer video, the method including coding image data to a multi-layer coding image; generating at least one type of scalability information from among different types of scalability information for at least one coding-target layer image from the multi-layer coding image; generating a layer ID of the coding-target layer image by using the scalability information; obtaining, from the bitstream, a flag indicating whether scalability information has been included in the layer ID; and generating a bitstream including the layer ID and the flag.

The generating of the layer ID of the coding-target layer image by using the scalability information may include generating the layer ID such that an expression of a value of the layer ID includes a value of the scalability information as a portion of the expression.

The coding-target layer image may include a plurality of pieces of scalability information, and an expression of the layer ID may include, as a portion thereof, a dimension ID representing scalability dimensions for a plurality of scalability types.

The coding-target layer image may include a plurality of pieces of scalability information, and the plurality of pieces of scalability information may be continued in a binary form and included in a binary expression of the layer ID.

The generating of the layer ID may include generating a syntax indicating a bit length by which scalability information included in the layer ID occupies a binary expression of the layer ID.

A plurality of scalability information may be sequentially included in the layer ID, and an indicator indicating the bit length may not indicate a bit length for scalability information included in the last order in the layer ID.

The bitstream may further include a scalability information collection of the at least one coding-target layer image that is generated according to scalability information types included in the at least one coding-target layer image and ID parts of the layer ID of the at least one coding-target layer image, and further include a flag representing that the scalability information collection is included in the bitstream.

According to an aspect of the present invention, there is provided an image decoding apparatus for decoding a multi-layer video, the apparatus including a receiver configured to receive a multi-layer video bitstream; and a decoder configured to, as a flag indicating whether scalability information has been included in a layer ID of at least one coding-target layer image, which is obtained from the bitstream, represents that a plurality of pieces of scalability information are obtained from the layer ID, decode the decoding-target layer image by using at least one type of scalability information from among a plurality of different types of scalability information, which is obtained from the layer ID, to thereby restore an image.

According to an aspect of the present invention, there is provided an image coding apparatus for coding a multi-layer video, the apparatus including a coder configured to generate at least one type of scalability information from among different types of scalability information for at least one coding-target layer image from a multi-layer coding image, generate a layer ID of the coding-target layer image by using the scalability information, generate a flag indicating whether scalability information has been included in the layer ID, and code image data into the multi-layer coding image; and an outputter configured to generate a bitstream including the layer ID and the flag.

According to an aspect of the present invention, there is provided a computer-readable recording medium having recorded thereon a program for executing the image decoding method.

According to an aspect of the present invention, there is provided a computer-readable recording medium having recorded thereon a program for executing the image coding method.

MODE OF THE INVENTION

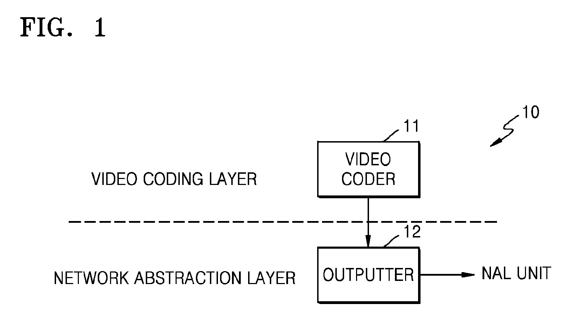

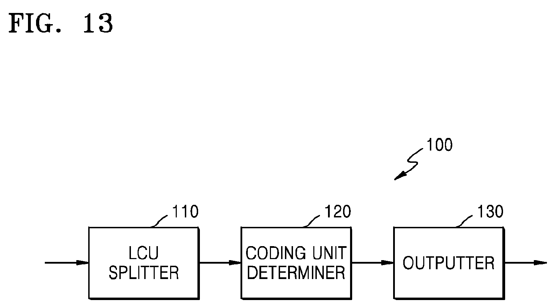

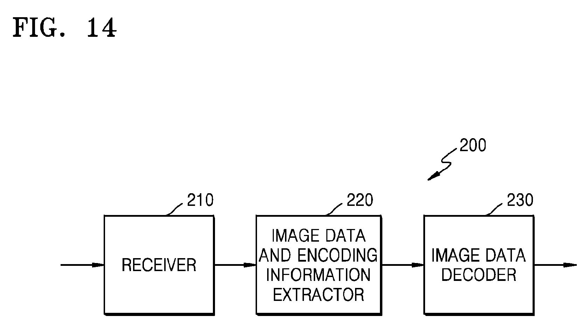

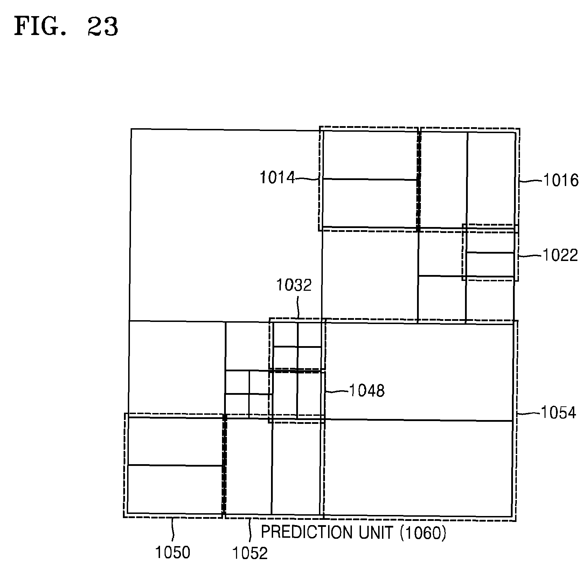

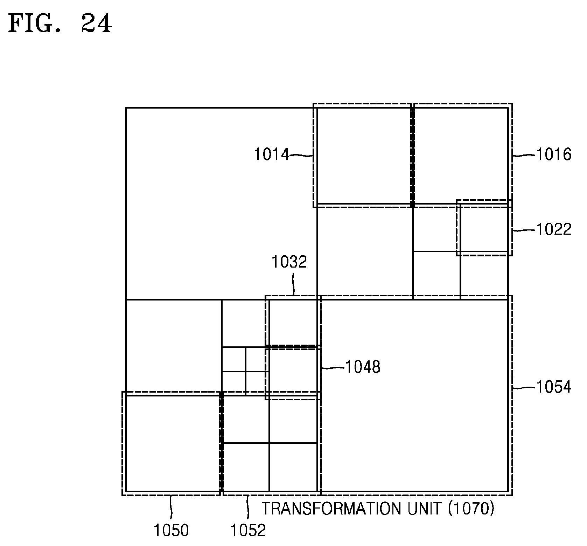

Embodiments of the present invention will now be described more fully with reference to the accompanying drawings. A multi-layer video coding method and a multi-layer video decoding method according to an embodiment will now be described with reference to FIGS. 1 through 13. Video coding and decoding methods based on a coding unit having a tree structure according to an embodiment will now be described with reference to FIGS. 13 through 25.

FIG. 1 is a block diagram of a structure of a multi-layer video coding apparatus 10 according to an embodiment.

Referring to FIG. 1, the multi-layer video coding apparatus 10 includes a video coder 11 and an outputter 12.

The video coder 11 receives and codes a multi-layer video. The video coder 11 corresponds to a video coding layer that codes an input video. As in FIGS. 13-25 to be described later, the video coder 11 may code each picture included in the multi-layer video, based on a coding unit having a tree structure.

The outputter 12 corresponds to a network abstraction layer (NAL) which adds encoded multi-layer video data and additional information to a transmission data unit having a predetermined format and outputs a result of the addition. The transmission data unit may be a NAL unit. The outputter 12 adds the multi-layer video data and the additional information to a NAL unit and outputs the NAL unit including the multi-layer video data and the additional information. The outputter 12 may output a bitstream generated using the NAL unit.

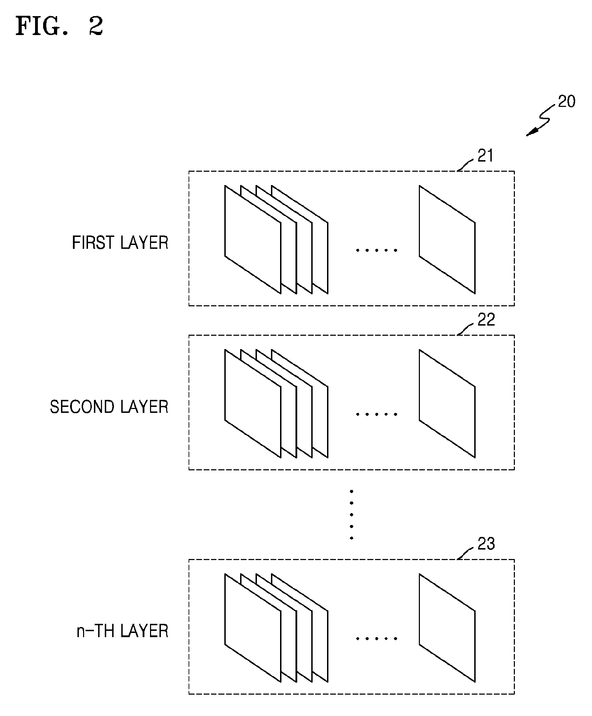

FIG. 2 illustrates a multi-layer video according to an embodiment.

In order for various network environments and various terminals to provide optimal services, the multi-layer video coding apparatus 10 may code multi-layer image sequences having various spatial resolutions, various qualities, various frame-rates, and different views and output a scalable bitstream. In other words, the multi-layer video coding apparatus 10 may code an input image according to various scalability types to generate and output a scalable video bitstream. Scalability includes temporal scalability, spatial scalability, quality scalability, multi-view scalability, and a combination thereof. These scalabilities may be classified by types. Scalabilities in each scalability type may be further classified by dimension identifiers (IDs).

For example, scalability has a scalability type, such as temporal scalability, spatial scalability, quality scalability, or multi-view scalability. Scalabilities in each type may be classified by scalability dimension IDs. For example, if a scalability type has different scalabilities, the different scalabilities may have different dimension IDs. For example, a higher scalability dimension may be allocated to a higher-dimensional scalability of a scalability type.

When a bitstream is capable of being divided into valid sub-streams, the bitstream is referred to as being scalable. A spatially scalable bitstream includes sub-streams having various resolutions. A scalability dimension is used to distinguish different scalabilities of an identical scalability type from one another. The scalability dimension may be expressed as a scalability dimension ID.

For example, a spatially scalable bitstream may be divided into sub-streams having different resolutions, such as QVGA, VGA, and WVGA sub-streams. For example, layers having different resolutions may be distinguished from one another by using dimension IDs. For example, the QVGA sub-stream may have a spatial scalability dimension ID of 0, the VGA sub-stream may have a spatial scalability dimension ID of 1, and the WVGA sub-stream may have a spatial scalability dimension ID of 2.

A temporally scalable bitstream includes sub-streams having various frame rates. For example, the temporally scalable bitstream may be divided into sub-streams having a frame rate of 7.5Hz, a frame rate of 15Hz, a frame rate of 30Hz, and a frame rate of 60Hz. A bitstream that is scalable in terms of quality may be divided into sub-streams having different qualities according to a Coarse-Grained Scalability (CGS) method, a Medium-Grained Scalability (MGS) method, and a Fine-Grained Scalability (FGS) method. Temporal scalabilities may be identified using different dimensions according to different frame rates, and quality scalabilities may also be identified using different dimensions according to different methods.

A multi-view scalable bitstream includes sub-streams of different views within a single bitstream. For example, a bitstream of a stereoscopic image includes a left image and a right image. A scalable bitstream may include sub-streams regarding a multi-view image and encoded data of a depth map. View scalabilities may be identified using different dimensions according to views.

Different scalability extension types may be coupled with each other. In other words, a scalable video bitstream may include sub-streams obtained by coding multi-layer image sequences comprised of images that are different in terms of at least one of temporal scalability, spatial scalability, quality scalability, and multi-view scalability.

FIG. 2 illustrates image sequences 21, 22, and 23 having different scalability extension types. The image sequence 21 corresponds to a first layer, the image sequence 22 corresponds to a second layer, and the image sequence 23 corresponds to an n-th layer (where n denotes an integer). The image sequences 21, 22, and 23 may be different in terms of at least one of a resolution, a quality, and a view. An image sequence of one layer from among the image sequence 21 of the first layer, the image sequence 22 of the second layer, and the image sequence 23 of the n-th layer may be an image sequence of a basic layer, and image sequences of the other layers may be image sequences of enhancement layers.

For example, the image sequence 21 of the first layer may be images of a first view, the image sequence 22 of the second layer may be images of a second view, and the image sequence 23 of the n-th layer may be images of an n-th view. As another example, the image sequence 21 of the first layer may be left-view images of a basic layer, the image sequence 22 of the second layer may be right-view images of the basic layer, and the image sequence 23 of the n-th layer may be right-view images of an enhancement layer. The image sequences 21, 22, and 23 having different scalability extension types are not limited thereto, and the image sequences 21, 22, and 23 may be image sequences having different image attributes.

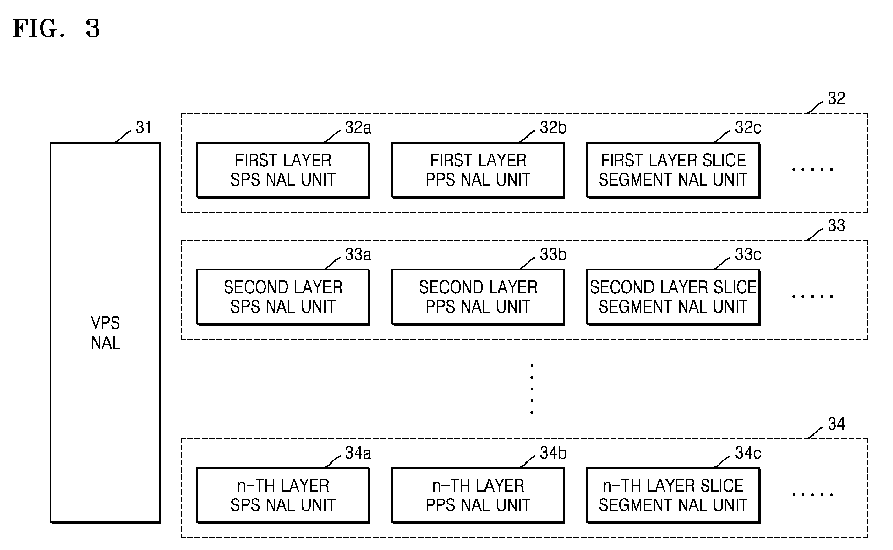

FIG. 3 illustrates NAL units including encoded data of a multi-layer video according to an embodiment.

As described above, the outputter 12 outputs the NAL units including the coded multi-layer video data and additional information.

A video parameter set (VPS) includes information that is applied to multi-layer image sequences 32, 33, and 34 included in a multi-layer video. An NAL unit including information about a VPS is referred to as a VPS NAL unit 31.

The VPS NAL unit 31 includes, for example, a common syntax element shared by the multi-layer image sequences 32, 33, and 34, information about an operation point to prevent transmission of unnecessary information, and necessary information about an operation point necessary for a session negotiation stage, such as a profile or a level. In particular, the VPS NAL unit 31 according to an embodiment includes scalability information related with a scalability ID for accomplishing scalability in the multi-layer video. The scalability information is used to determine scalability that is applied to the multi-layer image sequences 32, 33, and 34 included in the multi-layer video.

As will be described later, the scalability information includes information regarding a scalability type and a scalability dimension that are applied to the multi-layer image sequences 32, 33, and 34 included in the multi-layer video. In a coding/decoding method according to a first embodiment of the present invention, the scalability information may be obtained directly from the value of a layer ID included in a NAL unit header. The layer ID is included in a VPS and used to distinguish a plurality of layers from one another. The VPS may signal the layer ID of each layer via a VPS extension. The layer ID of each layer of the VPS may be included in a VPS NAL unit and then signalled. For example, a layer ID of NAL units that belong to a specific layer of the VPS may be included in a VPS NAL unit. For example, the layer ID of NAL units that belong to the VPS may be signalled via a VPS extension. Thus, in a coding/decoding method according to an embodiment of the present invention, scalability information about a layer of NAL units belonging to a VPS may be obtained using a layer ID of the NAL units.

In a coding/decoding method according to a second embodiment of the present invention, scalability information may be obtained by using a value obtained from a layer ID, by referring to a scalability split dimension table. For example, scalability information about a NAL unit may be obtained, by referring to a scalability split dimension table by using, as indices, an order at which a particular ID part included in a binary expression of the value of a layer ID is positioned in the layer ID, and the value of the particular ID part. In a coding/decoding method according to a third embodiment of the present invention, scalability information about a particular NAL unit may be obtained by referring to a scalability dimension table that is determined in the order of a layer ID value and a scalability type.

Layer ID information may be included in SPS NAL units 32a, 33a, and 34a including Sequence Parameter Set (SPS) information of layers, or in PPS NAL units 32b, 33b, and 34b including Picture Parameter Set (PPS) information of the layers, instead of being included in the VPS NAL unit 31.

An SPS includes information that is commonly applied to an image sequence of one layer. Each of the SPS NAL units 32a, 33a, and 34a including this SPS includes information that is commonly applied to the image sequences 32, 33, and 34.

A PPS includes information that is commonly applied to pictures of one layer. Each of the PPS NAL units 32b, 33b, and 34b including this PPS includes information that is commonly applied to the pictures of one layer. A PPS may include information about a coding mode, for example, an entropy coding mode, of all pictures and a quantization parameter initial value of a picture unit. The PPS does not need to be generated for each picture. In other words, when there are no PPSs, a previously existing PPS may be used, and, when information included in a PPS needs to be updated, a new PPS may be set, and a PPS NAL unit including information about the set PPS may be generated.

A slice segment includes coding data of at least one maximum coding unit. This slice segment may be included in slice segment NALs 32c, 33c, and 34c and then be transmitted.

As shown in FIG. 3, a video includes the multi-layer image sequences 32, 33, and 34. To identify a sequence, by including an SPS ID sequence_parameter_set_id in an SPS of each layer and designating the SPS ID for a PPS, a sequence including the PPS may be identified. By including a PPS ID picture_parameter_set_id in a PPS and including the PPS ID in a slice segment, it may be ascertained which PPS is used by the slice segment. An SPS and layer information which are used by the slice segment may also be identified by using the SPS ID included in the PPS indicated by the PPS ID of the slice segment. For example, it is assumed that an SPS ID sequence_parameter_set_id of the first layer SPS NAL 32a has a value of 0. In this case, the first layer PPS NAL 32b included in the first layer image sequence 32 includes a SPS ID sequence_parameter_set_id having a value of 0. It is also assumed that a PPS ID picture_parameter_set_id of the first layer PPS NAL 32b has a value of 0. In this case, the first layer slice segment NAL 32c, which refers to the first layer PPS NAL 32b, has a PPS ID picture_parameter_set_id having a value of 0.

Although FIG. 3 illustrates an example of forming a single VPS, a plurality of multi-layer videos each having the structure of FIG. 3 may be formed. In this case, to identify a multi-layer video including NAL units from among a plurality of multi-layer videos, a VPS ID video_parameter_set_id may be included in an SPS NAL unit. For example, when a VPS ID video_parameter_set_id of the VPS NAL unit 31 has a value of 0, the VPS ID video_parameter_set_id having a value of 0 may be included in the SPS NALs 32a, 33a, and 34a included in a single multi-layer video.

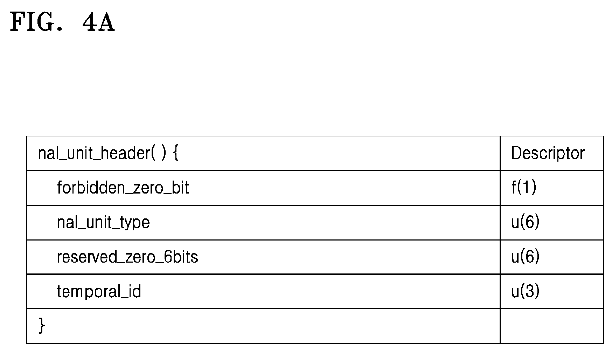

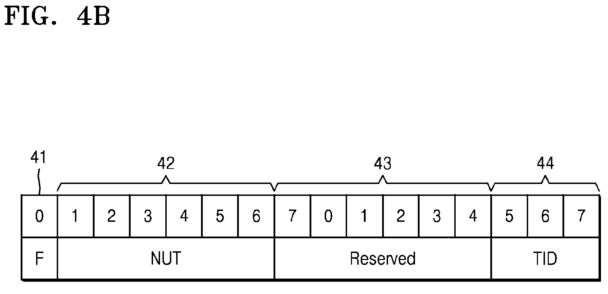

FIGS. 4A and 4B illustrate an example of a header of an NAL unit according to an embodiment.

Referring to FIGS. 4A and 4B, the header of the NAL unit has an overall length of 2 bytes. Numbers from 0 to 7 in FIG. 4B mean bits included in 2 bytes. The NAL unit header includes forbidden_zero_bit (F) 41, which is a bit for identifying the NAL unit and has a value of 0, a NAL unit type (NUT) 42, which is an ID indicating the type of NAL unit, a reserved region reserved_zero_6bits 43, which is reserved for future use, and a temporal ID (TID) 44. The reserved region reserved_zero_6bits 43, which is reserved for future use, may be assigned a layer ID nuh_layer_id of the NAL unit. Accordingly, the ID NUT 42 and the layer ID 43 may be each comprised of 6 bits, and the TID 44 may be comprised of 3 bits.

To add scalability information of a multi-layer video to the NAL unit shown in FIGS. 4A and 4B, the outputter 12 according to an embodiment may use the reserved region 43 from among the regions of the NAL unit header.

A header of a NAL unit for scalable extension of a multi-layer video according to an embodiment includes a reserved region 43 assigned a layer ID including scalability information, in addition to forbidden_zero_bit (F), which is a bit for identifying the NAL unit and has a value of 0, and an ID NUT indicating the type of NAL unit.

According to the value of NUT nal_unit_type, it may be determined whether the NAL unit is an Instantaneous Decoding Refresh (IDR) picture, a Clean Random Access (CRA) picture, a VPS, a SPS, a PPS, Supplemental Enhancement Information (SEI), an Adaptation Parameter Set (APS), a NAL unit reserved to be used for future extension, or a predefined NAL unit.

Table 1 shows types of NAL unit according to Nal_unit_type (NUT) according to an embodiment.

[Table 1]

| nal_unit_type | Name of nal_unit_type | Content of NAL unit and RBSP syntax structure |
|---|---|---|
| 0<br>1 | TRAIL_N<br>TRAIL_R | Coded slice segment of a non-TSA, non-STSA trailing picture<br>slice_segment_layer_rbsp( ) |
| 2<br>3 | TSA_N<br>TSA_R | Coded slice segment of a TSA picture<br>slice_segment_layer_rbsp( ) |
| 4<br>5 | STSA_N<br>STSA_R | Coded slice segment of an STSA picture<br>slice_segment_layer_rbsp( ) |
| 6<br>7 | RADL_N<br>RADL_R | Coded slice segment of a RADL picture<br>slice_segment_layer_rbsp( ) |
| 8<br>9 | RASL_N<br>RASL_R | Coded slice segment of a RASL picture<br>slice_segment_layer_rbsp( ) |
| 10<br>12<br>14 | RSV_VCL_N10<br>RSV_VCL_N12<br>RSV_VCL_N14 | Reserved non-IRAP sub-layer non-reference VCL NAL unit types |
| 11<br>13<br>15 | RSV_VCL_R11<br>RSV_VCL_R13<br>RSV_VCL_R15 | Reserved non-IRAP sub-layer reference VCL NAL unit types |
| 16<br>17<br>18 | BLA_W_LP<br>BLA_W_RADL<br>BLA_N_LP | Coded slice segment of a BLA picture<br>slice_segment_layer_rbsp( ) |
| 19<br>20 | IDR_W_RADL<br>IDR_N_LP | Coded slice segment of an IDR picture slice_segment_layer_rbsp( ) |
| 21 | CRA_NUT | Coded slice segment of a CRA picture slice_segment_layer_rbsp( ) |
| 22<br>23 | RSV_IRAP_VCL22<br>RSV_IRAP_VCL23 | Reserved IRAP VCL NAL unit types |
| 24..31 | RSV_VCL24..<br>RSV_VCL31 | Reserved non-IRAP VCL NAL unit types |
| 32 | VPS_NUT | Video parameter set<br>video_parameter_set_rbsp( ) |
| 33 | SPS_NUT | Sequence parameter set<br>seq_parameter_set_rbsp() |
| 34 | PPS_NUT | Picture parameter set<br>pic_parameter_set_rbsp( ) |
| 35 | AUD_NUT | Access unit delimiter<br>access_unit_delimiter_rbsp( ) |
| 36 | EOS_NUT | End of sequence<br>end_of_seq_rbsp( ) |
| 37 | EOB_NUT | End of bitstream<br>end_of_bitstream_rbsp( ) |
| 38 | FD_NUT | Filler data |

(continued)

| nal_unit_type | Name of nal_unit_type | Content of NAL unit and RBSP syntax structure |
|---|---|---|
| | | filler_data_rbsp( ) |
| 39<br>40 | PREFIX_SEI_NUT<br>SUFFIX_SEI_NUT | Supplemental enhancement information<br>sei_rbsp( ) |
| 41..47 | RSV_NVCL41..<br>RSV_NVCL47 | Reserved |

Referring to Table 1, nal_unit_type of a NAL unit including a VPS may be set to 32. Scalable extension type information of a multi-layer video according to an embodiment may be included in NAL units reserved for future use, namely, NAL units each of which nal_unit_type has a value ranging from 41 to 47. However, embodiments are not limited thereto, and the types of NAL unit according to nal_unit_type may vary.

The video coder 11 may generate Splitting_flag, which is a flag indicating whether a decoding apparatus needs to generate ID parts by splitting a layer ID in order to determine a scalability ID, and include the generated Splitting_flag in a NAL unit. For example, the ID parts may be IDs which split a bit expression of the layer ID. The layer ID may be split into a plurality of ID parts. For example, the video coder 11 may set the value of Splitting_flag to 1, in order to signal the fact that a scalability ID needs to be determined using the values of ID parts into which the layer ID is split. The video coder 11 may set the value of Splitting_flag to 0, in order to signal the fact that a scalability ID needs to be determined using the value of a layer ID that is not split.

The video coder 11 may generate Split_dimension_present_flag, which is a flag indicating whether to use ID parts, into which a layer ID has been split, as a reference index of a split dimension ID table, and include the generated Split_dimension_present_flag in the NAL unit. The video coder 11 may set split_dimension_present_flag to 1 in order to signal the fact that split_dimension_id[][], which is a split dimension ID table, is provided, and set split_dimension_present_flag to 0 in order to signal the fact that split_dimension_id[][] is not provided.

The video coder 11 may generate split_dimension_id[][], which is a split dimension ID table. Here, split_dimension_id[i][j] indicates a j-th dimension ID of an i-th scalability dimension type, wherein i and j are 0 or positive integers. The video coder 11 may sequentially set an index for each scalability type starting from 0, according to a scalability type order that is predetermined between coding and decoding apparatuses.

When the value of split_dimension_id[i][j] is 0 with respect to particular i and j, the video coder 11 may not generate split_dimension_id[i][j]. The number of bits for expressing split_dimension_id[i][j] is dimension_id_len_minus1[j]+1, and dimension_id_len_minus1[j] is a result of subtracting 1 from a bit length of a dimension ID received from the coding apparatus.

For example, the video coder 11 may set Splitting_flag to 1 and Split_dimension_present_flag to 0 in order to signal the fact that the value of a scalability ID needs to be obtained directly from the values of ID parts without referring to the split dimension ID table, and set both Splitting_flag and Split_dimension_present_flag to 1 in order to signal the fact that the value of a scalability ID needs to be obtained by referring to the split dimension ID table split_dimension_id[][] in which the values of ID parts are used as an index.

The video coder 11 may generate Scalability_mask, which is information indicating which scalability type is used, and include the generated Scalability_mask in the NAL unit. Scalability_mask may be an index or a flag.

scalability_mask[i] may be an arrangement of flags that set the scalability type order previously determined between the coding apparatus and the decoding apparatus as an index for each scalability type and sequentially represent use or non-use of each scalability type according to each index in the order of 1 and 0. The scalability type order may be predetermined between the coding apparatus and the decoding apparatus or may be signalled separately.

For example, when the scalability type order is predetermined as the order of view scalability, spatial scalability, and temporal scalability between the coding and decoding apparatuses, scalability types may sequentially correspond to indices starting from 0 in scalability_mask[i] (where i is 0 or a positive integer). For example, when scalability_mask[0] is view scalability, scalability_mask[1] is spatial scalability, and scalability_mask[2] is temporal scalability, the video coder 11 may set scalability_mask[0] to 1 and scalability_mask[1] and scalability_mask[2] to 0 in order to signal the fact that view scalability type is used and spatial scalability type and temporal scalability type are not used.

The video coder 11 may determine a bit length of each split ID, and signal the determined bit length to the decoding apparatus.

For example, the video coder 11 may determine a length of each split ID of a layer ID and signal the determined length to the decoding apparatus, in order to include a dimension ID for a particular scalability type in some of the split IDs of the layer ID. For example, the video coder 11 may determine a bit length of a split ID and signal the determined bit length to the decoding apparatus. Alternatively, the video coder 11 may determine a length of each split ID of a layer ID, and signal the determined length to the decoding apparatus, in order to include an ID for a particular scalability type for referring to a split dimension ID table in some of the split IDs of the layer ID. For example, the video coder 11 may determine a bit length of a split ID and signal the determined bit length to the decoding apparatus.

For example, the video coder 11 may generate a bit length of a split ID, representing a dimension ID of a scalability type, for each the scalability type, and include the generated bit lengths in the NAL unit. For example, the video coder 11 may signal dimension_id_len_minus1[i], which is obtained by subtracting 1 from a bit length of an i-th split ID having an index of i, to the decoding apparatus, wherein i is 0 or a positive integer.

At this time, the video coder 11 may not signal a length of a split ID of a scalability type having the last index to the decoding apparatus. For example, the video coder 11 may not signal, to the decoding apparatus, a bit length of a split ID of a scalability type having the last index from among scalability types applied to a coding image. Thus, the bit length of the split ID of the scalability type having the last index may not be included in the NAL unit, because, without obtaining the bit length of the split ID of the scalability type having the last index from the NAL unit, the decoding apparatus is able to determine the bit length of the split ID of the scalability type having the last index by using bit lengths of split IDs of scalability types other than the scalability type having the last index.

The video coder 11 may further signal max_layers_scalability_dimension, which is an ID indicating a maximum number of layers for a scalability dimension type indicated by an i-th scalability mask.

max_layers_scalability_dimension_minus1[i] indicates a maximum number of layers for a scalability dimension type indicated by an i-th scalability index. In max_layers_scalability_dimension_minus1[i], i is 0 or a positive integer. The number of bits that are used to express max_layers_scalability_dimension_minus1[i] is dimension_id_len_minus1[i]+1.

max_layers_scalability_dimension_minus1 may be used to inform a maximum number of layers corresponding to each scalability dimension type. This information may be usefully used during content information transmission or session negotiation.

When Splitting flag is equal to 1, the coding apparatus does not need to send dimension_id[i][j] to the decoding apparatus. dimension_id[i][j] indicates a scalability dimension ID for a j-th scalability type of an i-th layer.

When a scalability type is determined using the order of ID parts of a layer ID and a scalability dimension ID is determined using the values of the ID parts according to an embodiment of the present invention, dimension_id[i][j] may be inferred from the value of nuh_layer_id as the value of a j-th ID part of a layer ID of an i-th layer is equal to the value of dimension_id[i][j].

When is 1, in order to map each ID part of nuh_layer_id with a specific value of dimension_id, split_dimension_id[i][j] may be signalled numbering as many as the number of max_layers_scalability_dimension_minus1[i]. For example, j may be an integer ranging from 1 to max_layers_scalability_dimension_minus1[i]. split_dimension_id[i][j] is a dimension ID of a j-th layer for the i-th scalability type, wherein i is 0 or a positive integer.

When Splitting_flag is 1, dimension_id_len_minus_1[i], which is a length of a last split ID in the layer ID, does not need to be signalled, because the length of the last split ID may be inferred from a sum of the values of the other dimension_id_len_minus1[i]. According to an embodiment, the sum of the values of the other dimension_id_len_minus1[i] is equal to 6 when the value of splitting_flag is equal to 1.

A method in which the video coder 11 determines a layer ID in order to signal a scalability ID will now be described in more detail. A layer ID which will be described below may be included in a VPS for each layer in order to identify a NAL unit for a specific layer of the VPS, and may be included in a header of each NAL unit. For example, the layer ID may be included in an extension region of a VPS in order to identify a NAL unit for a specific layer of the VPS. Each scalability ID ScalabilityId[i][smIdx] indicates the ID of an smIdx-th scalability dimension type of an i-th layer. In scalability ID ScalabilityId[i][smIdx], i and smIdx are 0 or positive integers.

According to a first embodiment, the video coder 11 may use the dimension ID of at least one scalability type as a split ID, and generate a layer ID for at least one of a plurality of layers of a VPS by combining the split IDs. For example, the video coder 11 may determine a layer ID by combining the bits of dimension IDs of different scalability types, thereby determining, as the layer ID, a consecutive combination of ID parts that express the dimension ID of each scalability type.

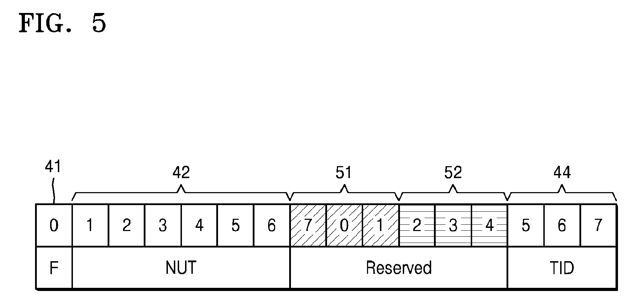

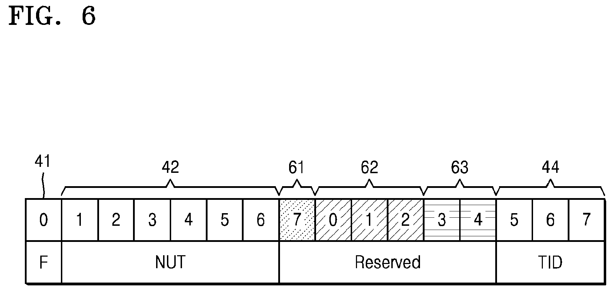

A scalability type and a scalability dimension ID may be expressed as a sequential arrangement of scalability dimension IDs according to scalability types in a layer ID. A method in which the video coder 11 expresses a plurality of pieces of scalability information by using a layer ID will now be described with reference to FIGS. 5 and 6.

FIG.5 shows a header of a NAL unit including a layer ID including two types of scalability information. The layer ID is positioned in a reserved region of the NAL unit header and may express two pieces of scalability information. Referring to FIG. 5, the layer ID may be divided into two ID parts. For example, a first ID part 51 may include a dimension ID of a first scalability type, and a second ID part 52 may include a dimension ID of a second scalability type. For example, a first ID part may include a dimension ID value for spatial scalability, and a second ID part may include a dimension ID value for temporal scalability.

FIG.6 shows a header of a NAL unit including a layer ID including dimension IDs of three types of scalability types. A layer ID in FIG. 6 is expressed as a reserved region, as in FIG. 5. The layer ID may express three scalability types. Referring to FIG. 6, the layer ID may be divided into three ID parts respectively including respective dimension IDs of the three scalability types. For example, a first ID part 61 may include a dimension ID of a first scalability type, a second ID part 62 may include a dimension ID of a second scalability type, and a third ID part 63 may include a dimension ID of a third scalability type. For example, the first scalability type may be spatial scalability, the second scalability type may be temporal scalability, and the third scalability type may be reference scalability.

As described above with reference to FIGS. 5 and 6, the number of scalability types included in a layer ID may be an integer. The scalability dimension IDs included in the layer ID may be expressed as an integral number of bits. Although the layer ID is expressed as 6 bits in FIGS. 5 and 6, when a bit length of the layer ID extends, the number of scalability types expressed as a layer ID and the number of bits that express scalability dimension IDs may increase according to a bit length of the extended layer ID.

According to a first embodiment, the video coder 11 may set to 1 and Split_dimension_present_flag to 0 in order to signal, to the decoding apparatus, that the value of a scalability ID may be determined by obtaining the value of the scalability ID directly from the value of an ID part without referring to a split dimension ID table.

The video coder 11 may signal a scalability type for use in decoding to the decoding apparatus by using Scalability_mask[]. In addition, the video coder 11 may signal the bit length of a split ID for an i-th scalability type for use in decoding to the decoding apparatus by using dimension_id_len_minus1[i]. According to the first embodiment, since the split ID is used directly as a dimension ID, dimension_id_len_minus1[i], which is used to indicate the length of the split ID, may be used to indicate the length of the dimension ID. The video coder 11 may perform signaling by including Scalability_mask[] and dimension_id_len_minus1[i] in a VPS and transmitting the VPS including Scalability_mask[] and dimension_id_len_minus_1[i] to the decoding apparatus.

According to a second embodiment, the video coder 11 may signal a scalability type and a dimension ID to the decoding apparatus by generating a split dimension ID table and indices for referring to the split dimension ID table and generating a VPS NAL unit by using the generated split dimension ID table and indices.

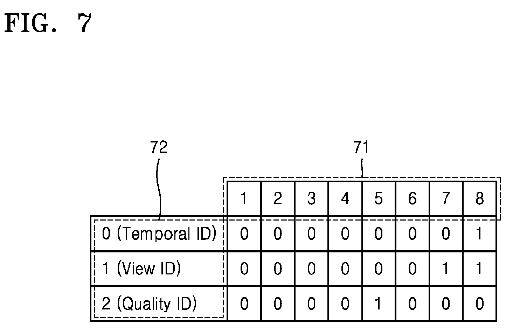

For example, split_dimension_id[i][j], which is the split dimension ID table, may have a format such as an ID table shown in FIG. 7. FIG. 7 shows a split dimension ID table according to an embodiment. In the split dimension ID table, i is an index 72 of a scalability type, and j is an ID index 71 in the scalability type. For example, referring to FIG. 7, split_dimension_id[0][8] is referred to as an eighth ID index in temporal scalability, and thus split_dimension_id[0][8] indicates a scalability ID value of 1.

Indices of scalability types according to the order of the scalability types may be predetermined between a coding apparatus and a decoding apparatus, or the coding apparatus may separately signal the indices to the decoding apparatus. Similar to the method described in the first embodiment, the video coder 11 may include in a layer ID an ID part indicating an ID index for each scalability type according to the index of the scalability type.

For example, referring to FIG. 5, the first ID part 51 of the layer ID may include an ID index 71 of a first scalability type 72 in the split dimension ID table, and a second ID part 52 thereof may include an ID index 71 of a second scalability type 72 in the split dimension ID table.

According to first and second embodiments, the video coder 11 may restrict the number of scalability types and a bit length of an ID part in order to allocate information about a scalability type and a scalability dimension ID within a bit length of a layer ID. For example, the video coder 11 may use the scalability information expressing methods according to the first and second embodiments together. When a scalability dimension ID value for a particular scalability type fails to be expressed as a bit length of an ID part allocated to express the scalability dimension ID within the layer ID, the video coder 11 is unable to allocate the value of the dimension ID to a particular ID part of the layer ID according to the first embodiment, and thus the video coder 11 may generate a split dimension ID table according to the second embodiment, and allocate an ID index for referring to a dimension ID of the scalability type within the split dimension ID table to a particular ID part corresponding to the scalability type in the layer ID.

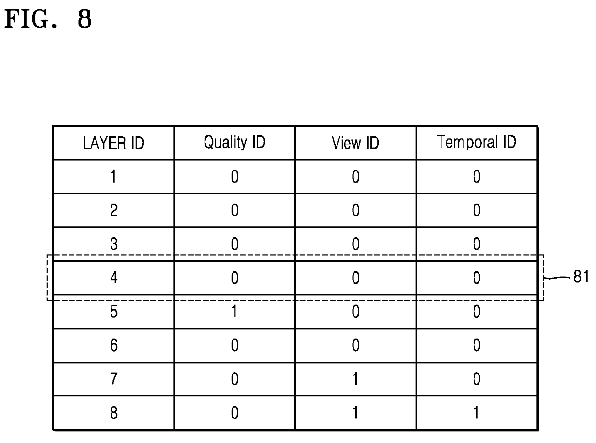

According to a third embodiment, the video coder 11 may transmit a dimension ID table dimension_id[i][j] indicating a dimension ID for the scalability type that is possessed by each layer included in a VPS NAL unit. FIG. 8 shows a dimension ID table according to an embodiment. As shown in FIG. 8, the dimension ID table dimension_id[i][j] is a table indicating a dimension ID value of a j-th scalability dimension type in an i-th layer. Indices of scalability types according to the order of the scalability types may be predetermined between a coding apparatus and a decoding apparatus, or may be separately signalled by the coding apparatus to the decoding apparatus.

There exist several methods of interpreting reserved_6bits and nuh_layer_id of an NAL unit header in order to obtain scalability information for a NAL unit as described above. In a splitting method according to a first embodiment, the bits of a layer ID are allocated to a particular scalability ID. According to a second embodiment, the bits of a layer ID are mapped with a particular scalability ID. According to a third embodiment, a layer ID is mapped with a scalability ID. All of the above-described three methods may require syntax elements in a VPS extension. In the mapping method according to the third embodiment, a restricted number of bits in the NAL unit header are more effectively used. However, more complicated signaling and processing are required, compared with the methods according to the first and second embodiments. The splitting method according to the first embodiment may be applied earlier than the mapping method according to the second embodiment and the mapping method according to the third embodiment. The mapping method according to the second embodiment may be applied earlier than the mapping method according to the third embodiment.

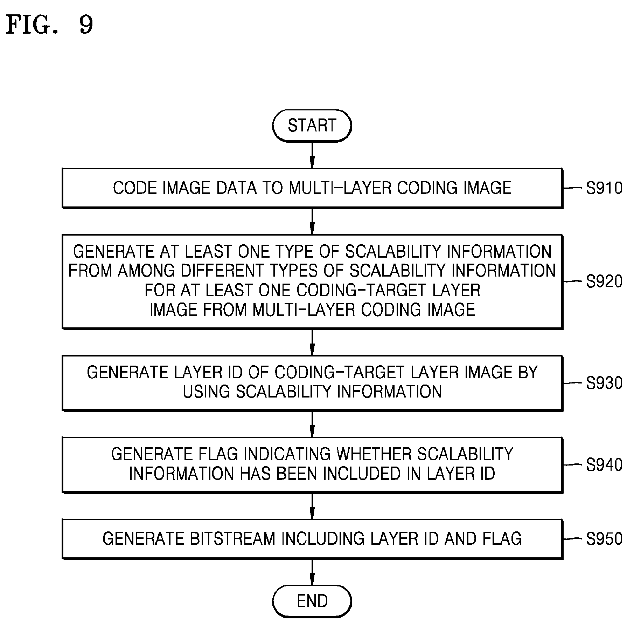

FIG. 9 is a flowchart of a coding method according to an embodiment of the present invention. The coding method according to an embodiment of the present invention will be described with reference to FIG. 9. First, a coding apparatus codes image data to a multi-layer coding image, in operation S910.

Next, the coding apparatus generates at least one type of scalability information from among different types of scalability information for at least one coding-target layer image from the multi-layer coding image, in operation S920.

Next, the coding apparatus generates a layer ID of the coding-target layer image by using the scalability information, in operation S930. The coding apparatus may generate a layer ID such that an expression of the value of the layer ID includes the value of the scalability information as a portion of the expression. The coding apparatus may generate a syntax including an indicator indicating the number of types of scalability information included in the layer ID.

The coding-target layer image includes a plurality of pieces of scalability information, and the coding apparatus may generate a layer ID such that an expression of the layer ID includes, as a portion thereof, a dimension ID representing scalability dimensions for a plurality of scalability types. The plurality of pieces of scalability information may be continued in a binary form and included in a binary expression of the layer ID.

The coding apparatus may generate a syntax including an indicator indicating a bit length by which scalability information included in the layer ID occupies the binary expression of the layer ID. For example, the plurality of pieces of scalability information may be sequentially included in the layer ID, and the coding apparatus may generate a syntax including an indicator representing a bit length such that a bit length is not represented for scalability information last included in the layer ID.

Next, the coding apparatus generates a flag indicating whether scalability information has been included in the layer ID, in operation S940.

Next, the coding apparatus generates a bitstream including the layer ID and the flag, in operation S950. The bitstream may further include a scalability information collection of the at least one coding-target layer image that is generated according to scalability information types included in the at least one coding-target layer image and the layer ID of the at least one coding-target layer image, and may further include a flag representing that the scalability information collection is included in the bitstream.

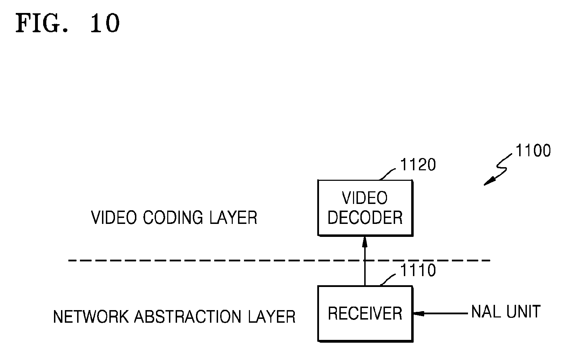

FIG. 10 is a block diagram of a structure of a multi-layer video decoding apparatus 1100 according to an embodiment.

Referring to FIG. 10, the multi-layer video decoding apparatus 1100 includes a receiver 1110 and a video decoder 1120.

The receiver 1110 receives a multi-layer video bitstream. The receiver 110 may receive the multi-layer video bitstream and thus receive an NAL unit of an NAL. To determine a scalability ID according to embodiments of the present invention, pieces of information including an ID and flags associated with a scalability ID that is used may be included in a VPS extension region. A layer ID may be included in a reserved region of the NAL unit. In addition, the VPS extension region may include layer IDs corresponding to layers of a VPS. NAL units corresponding to a specific layer of a VPS may include, in a header thereof, a layer ID corresponding to the layer.

The video decoder 1120 may obtain Splitting_flag, which is a flag indicating whether to generate ID parts by splitting a bit expression of a layer ID in order to determine a scalability ID, from the bitstream, for example, from the VPS. For example, when the value of is 1, the video decoder 1120 may determine a scalability ID by using the values of the ID parts generated by splitting the layer ID. When the value of Splitting_flag is 0, the video decoder 1120 may determine a scalability ID by using the value of a non-split layer ID.

The video decoder 1120 may obtain Split_dimension_present_flag, which is a flag indicating use or non-use of the ID parts, into which the layer ID has been split, as a reference index of a split dimension ID table, from the bitstream, for example, from the VPS. When split_dimension_present_flag is 1, this indicates that split_dimension_id[i][j], which is a split dimension ID table, is provided. When split_dimension_present_flag is 0, this indicates that split_dimension_id[i][j] is not provided. When the value of split_flag is 1, split_dimension_id[i][j] , which is a split dimension ID table, specifies a j-th dimension ID of an i-th scalability dimension type. When split_dimension_id[i][j] is not provided for particular i and j, the value of split_dimension_id[i][j] is inferred as 0. The number of bits for expressing split_dimension_id[i][j] may be dimension_id_len_minus1[j]+1. dimension_id_len_minus1[j] represents a value obtained by subtracting 1 from the number of bits necessary for signaling a maximum layer for each scalability dimension type or a bit length of an ID part received from a coding apparatus.

For example, when Splitting_flag is 1 and Split_dimension_present_flag is 0, the video decoder 1120 may determine that the value of a scalability ID needs to be obtained directly from the values of the ID parts without referring to the split dimension ID table. When and Split_dimension_present_flag are both 1, the video decoder 1120 may determine that the value of a scalability ID needs to be obtained by referring to the split dimension ID table split_dimension_id[][] in which the values of ID parts are used as an index. For example, when splitting_flag and split_dimension_present_flag are both 1, the video decoder 1120 may obtain scalability information by referring to the table split_dimension_id[i][j] by using the ID parts of the layer ID. For example, the video decoder 1120 may obtain scalability information by referring to the split dimension ID table split_dimension_id[][], in which the order of scalability types and the dimension IDs of the scalability types are used as indices, by using the index of a scalability type that is to be referred to and ID parts of a layer ID corresponding to the scalability type that is to be referred to.

The video decoder 1120 may obtain Scalability_mask, which is information indicating which scalability type is used by the encoding apparatus, from the bitstream, for example, from the VPS. Scalability_mask may be an index or a flag.

The video decoder 1120 may receive scalability_mask from the coding apparatus and determine which scalability type is included in the bitstream received from the coding apparatus. scalability_mask[i] may be an arrangement of flags that set the scalability type order previously determined between the coding apparatus and the decoding apparatus as an index for each scalability type and sequentially represent use or non-use of each scalability type according to each index in the order of 1 and 0. The scalability type order may be predetermined between the coding apparatus and the decoding apparatus or may be signalled separately.

For example, when the order of the scalability types is predetermined as the order of view scalability, spatial scalability, and temporal scalability between the coding and decoding apparatuses, scalability types may sequentially correspond to indices starting from 0 in scalability_mask[i]. For example, when the value of scalability_mask[0] is 1 and the value of scalability_mask[1] is 1, the video decoder 1120 may determine that a view scalability type is used and a spatial scalability type is not used.

The video decoder 1120 may determine the number NumScalabilityTypes of scalability types of a coding image included in the bitstream by using the value of Scalability_mask. For example, the video decoder 1120 may determine the number NumScalabilityTypes of scalability types that are to be used in decoding a coding image corresponding to the VPS, by summing all values of 1 expressed by Scalability_mask[].

The video decoder 1120 determines a bit length of an ID part including information about a dimension ID indicating the dimension of each scalability type. For example, the video decoder 1120 may determine a bit length of a dimension ID indicating the dimension of a scalability type, by obtaining a bit length dimension_id_len_minus1[i] of an ID part including information about the dimension ID from the bitstream, for example, the VPS, received from the coding apparatus.

dimension_id_len_minus1[i] is a value obtained by subtracting 1 from the bit length of the ID part. Thus, the video decoder 1120 may determine a bit length that expresses a dimension ID for determining a scalability ID of an i-th scalability type, by adding 1 to dimension_id_len_minus1[i].

In this case, the video decoder 1120 may directly determine a length of an ID part of the last scalability type without obtaining the length of the ID part from the VPS. Thus, the decoding apparatus 1100 may not receive the bit length of the ID part from the coding apparatus but may directly determine the bit length of the ID part. For example, the video decoder 1120 may determine a bit length of an ID part of a scalability type having a last index, by subtracting a sum of bit lengths of ID parts of all but the scalability type having the last index from the bit length of the layer ID.

For example, a value dimension_id_len_minus1 obtained by subtracting 1 from a bit length of an ID part of a scalability type arranged in the last order in the layer ID may be determined using a sum of the lengths of ID parts allocated to the other scalability dimension types arranged in the layer ID. For example, dimension_id_len_minus1 for the ID part of the scalability dimension type arranged in the last order in the layer ID may be calculated by subtracting a sum of the lengths of ID parts allocated to the other scalability dimension types arranged in the layer ID from the bit length of the layer ID. For example, when NumScalabilityTypes indicates the number of scalability types used and indices of the scalability types starts from 0, NumScalabilityTypes - 1 indicates a last index of a scalability type. When the bit length of the layer ID is 6, the video decoder 1120 may determine dimension_id_len_minus1[NumScalabilityTypes - 1] by using dimBitOffset[NumScalabilityTypes - 1] as expressed in Equation 1:

【Equation 1】

$$dimension\_id\_len\_minus1[NumScalabilityTypes - 1] = 6 - dimBitOffset[NumScalabilityTypes - 1]$$

where dimBitOffset[i] indicates a start bit offset of an ID part for i. dimBitOffset[j] is calculated using Equation 2:

【Equation 2】

$$dimBitOffset[j] = \sum_{dimIdx=0}^{j-1} (dimension\_id\_len\_minus1[dimIdx]+1)$$

where dimension_id_len_minus1[j] is obtained by subtracting 1 from a bit length of an ID part representing the dimension ID of the j-th scalability dimension type in the layer ID. Thus, dimBitOffset[j] is an index indicating a bit start location of the dimension ID of the j-th scalability dimension type in the layer ID.

For example, when the bit length of the layer ID is 6 and the most significant bit (MSB) of a bit offset in the layer ID has an index of 0, the value of dimension_id_len_minus1[NumScalabilityTypes-1, which is the bit length of the ID part of the scalability type arranged in the last order in the layer ID, may be determined to be 5 - dimBitOffset[NumScalabilityTypes-1].

To allocate a scalability ID via splitting of the layer ID, the value of dimBitOffset[NumScalabilityTypes] may be set to be smaller than the bit length of the layer ID. For example, when the bit length of the layer ID is 6 and the MSB thereof has an index of 0, the value of dimBitOffset[NumScalabilityTypes] may be set to 6. When NumScalabilityTypes is greater than 0, dimension_id_len_minus1 of the scalability dimension types may be set such that dimBitOffset[NumScalabilityTypes-1] is smaller than 6.

The video decoder 1120 may further receive max_layers_scalability_dimension, which is an ID indicating a maximum number of layers for a scalability dimension indicated by an i-th scalability mask.

max_layers_scalability_dimension_minus1[i] specifies a maximum number of layers for a scalability dimension indicated by an i-th scalability index. The number of bits that are used to express max_layers_scalability_dimension_minus1[i] is dimension_id_len_minus1 [i]+1.

A method in which the video decoder 1120 determines a scalability ID will now be described in more detail. ScalabilityId[i][smIdx] indicates the ID of an smIdx-th scalability dimension type of an i-th layer.

According to a first embodiment, the video decoder 1120 may determine the value of the scalability ID by using the values of ID parts into which the value of a layer ID is split. For example, when Splitting_flag is 1 and Split_dimension_present_flag is 0, the video decoder 1120 may determine the value of the scalability ID by directly obtaining the value of the scalability ID from the values of the ID parts without referring to a split dimension ID table.

The video decoder 1120 may split bits expressing the layer ID into ID parts each including at least one bit according to the order of scalability types. For example, the video decoder 1120 may split the bits of a layer ID in units of bit lengths of a dimension ID representing the dimension of each scalability type and thus determine, from the layer ID, ID parts that express the dimension ID of each scalability type. For example, the video decoder 1120 may determine the ID parts representing the dimension ID of each scalability type from the layer ID, by using dimension_id_len_minus1[i] representing a bit length of a dimension ID for an i-th scalability type from among scalability types determined as scalability types that are used in decoding according to the value of Scalability_mask[].

The video decoder 1120 may determine the dimension ID for the scalability type from the ID parts for the scalability type. Thus, according to the first embodiment, the video decoder 1120 may obtain, from a layer ID, a scalability type for use in decoding an image corresponding to the layer ID, and a dimension ID of the scalability type, by using Scalability_mask[] and dimension_id_len_minus1[i].

For example, the video decoder 1120 may determine a scalability ID of a j-th scalability type of an i-th layer by using the value of a particular ID part of a layer ID of the i-th layer, as expressed in Equation 3:

【Equation 3】

$$ScalabilityId[i][j] = (layer\_id\_in\_nuh[i] \& ((1 << (dimension\_id\_len\_minus1[j]+1)-1) >> dimBitOffset[j]))$$

As shown in Equation 3, the video decoder 1120 may determine the value of the particular ID part of the layer ID by performing a "and" operation on the layer ID and a bit value representing a bit location assigned a value for a particular scalability type in the layer ID.

According to a second embodiment, the video decoder 1120 may determine the scalability ID by using a split dimension ID table received from the coding apparatus.

For example, when Splitting_flag and Split_dimension_present_flag are both 1, the video decoder 1120 may not directly determine a value of an ID part as a scalability ID value, but may determine the scalability ID value by referring to the split dimension ID table split_dimension_id[][] by using the value of the ID part as an ID index in the split dimension ID table. The video decoder 1120 may obtain the scalability ID value by referring to the split dimension ID table by using the order of scalability types and the values of ID parts into which a layer ID is split according to the order of scalability types.

For example, the video decoder 1120 may obtain a scalability ID ScalabilityId[i][j] by referring to the split dimension ID table by using the value of an ID part for the j-th scalability dimension type in the layer ID of the i-th layer. ScalabilityId[i][smIdx] indicates the dimension ID of the j-th scalability dimension type of the i-th layer. For example, the scalability ID ScalabilityId[i][j] may be calculated using Equation 4:

【Equation 4】

$$ScalabilityId[i][j] = split\_dimension\_id[j][(layer\_id\_in\_nuh[i] \& ((1 << (dimension\_id\_len\_minus1[j]+1)-1) >> dimBitOffset[j]))]$$

where split_dimension_id[i][j], which is the split dimension ID table, may have a format such as the ID table shown in FIG. 7. In the split dimension ID table, i is an index of a scalability type, and j is an ID index in the scalability type. For example, referring to FIG. 7, split_dimension_id[0][8] is referred to as an eighth ID index in temporal scalability, and thus indicates a scalability ID value of 1.

(layer_id_in_nuh[i]&((1<<(dimension_id_len_minus1[j]+1)-1)>>dimBitOffset[j])) indicates an equation for obtaining the value of an ID part for a j-th scalability dimension type in an i-th layer ID.

According to a third embodiment, when the value of splitting_flag is 0, the video decoder 1120 determines the scalability ID by referring to a dimension ID table dimension_id[i][j] received from the coding apparatus. The dimension ID table dimension_id[i][j] indicates a dimension ID value of the j-th scalability dimension type in the i-th layer. For example, the video decoder 1120 may obtain a scalability ID for each scalability type in each layer by receiving the dimension ID table from the coding apparatus.

For example, the video decoder 1120 may determine a scalability ID scalabilityId[i][j] for the j-th scalability type for the i-th layer by referring to a dimension ID dimension_id[i][j] for a scalability type j for a layer ID i. The scalability ID scalabilityId[i][j] is expressed as in Equation 5:

Equation 5】

$$ScalabilityId[i][j] = dimension\_id[i][j]$$

The video decoder 1120 determines scalability applied to images included in a multi-layer video based on a scalability ID determined as above, and decodes the multi-layer video.

For example, the video decoder 1120 may determine a value of a view ID for a layer ID of an i-th layer as the dimension ID of a scalability type having an index of 0 of the i-th layer, and thus decode the multi-layer video.

The video decoder 1120 may decode the multi-layer video, based on coding units having a tree structure. Decoding of a multi-layer video based on coding units having a tree structure will now be described.

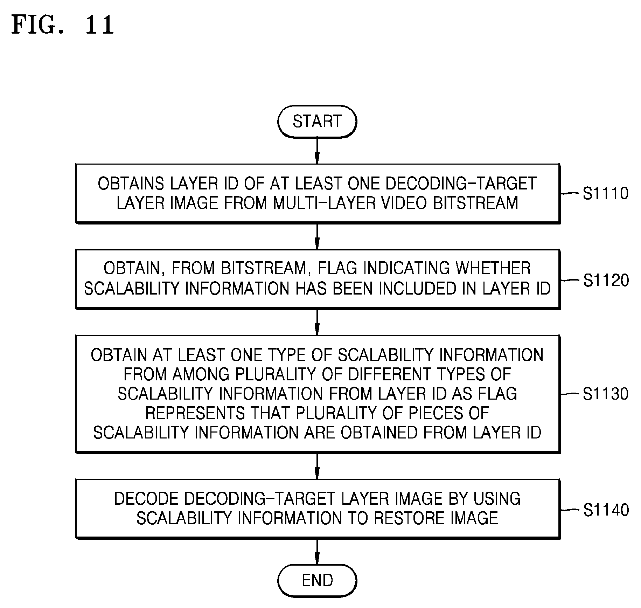

FIG. 11 is a flowchart of a multi-layer video decoding method according to an embodiment of the present invention. The multi-layer decoding method according to an embodiment of the present invention will be described with reference to FIG. 11.

First, a decoding apparatus according to an embodiment of the present invention obtains a layer ID of at least one decoding-target layer image from a multi-layer video bitstream, in operation S1110.

Next, the decoding apparatus obtains, from the bitstream, a flag indicating whether scalability information has been included in the layer ID, in operation S1120.

Next, the decoding apparatus obtains at least one type of scalability information from among a plurality of different types of scalability information from the layer ID as the flag represents that a plurality of pieces of scalability information are obtained from the layer ID, in operation S1130. The decoding apparatus may generate scalability information from a portion of an expression of the layer ID when the value of the flag is 1. The decoding-target layer image may include a plurality of pieces of scalability information, and the expression of the layer ID may include, as a portion thereof, a dimension ID representing a scalability dimension for a plurality of scalability types. The decoding-target layer image includes the plurality of pieces of scalability information, and the plurality of pieces of scalability information may be continued in a binary form and included in a binary expression of the layer ID. The decoding apparatus may generate the value of scalability information from a portion of the expression of the value of the layer ID.

In addition, the decoding apparatus may obtain a syntax including an indicator representing the number of types of scalability information included in the layer ID from the bitstream, and obtain scalability information of the decoding-target layer image from the layer ID by using the syntax representing the number of types.

The decoding apparatus may obtain, from the bitstream, a syntax including an indicator representing a bit length by which scalability information included in the layer ID occupies the binary expression of the layer ID, and obtain scalability information of the decoding-target layer image from the layer ID by using the syntax representing the bit length.

The decoding apparatus may determine a length of scalability information included in the last order in the layer ID by using a length of the layer ID and lengths of pieces of scalability information except for the scalability information included in the last order in the layer ID from among pieces of scalability information included in the layer ID.

The decoding apparatus may obtain a scalability information collection generated according to a scalability information type of the at least one decoding-target layer image and ID parts of the layer ID of the at least one decoding-target coding image, according to the value of a flag representing whether the scalability information collection is included in the bitstream, and obtain scalability information of the decoding-target layer image by using the scalability information collection.

Next, the decoding apparatus decodes the decoding-target layer image by using the scalability information to restore an image, in operation S1140.

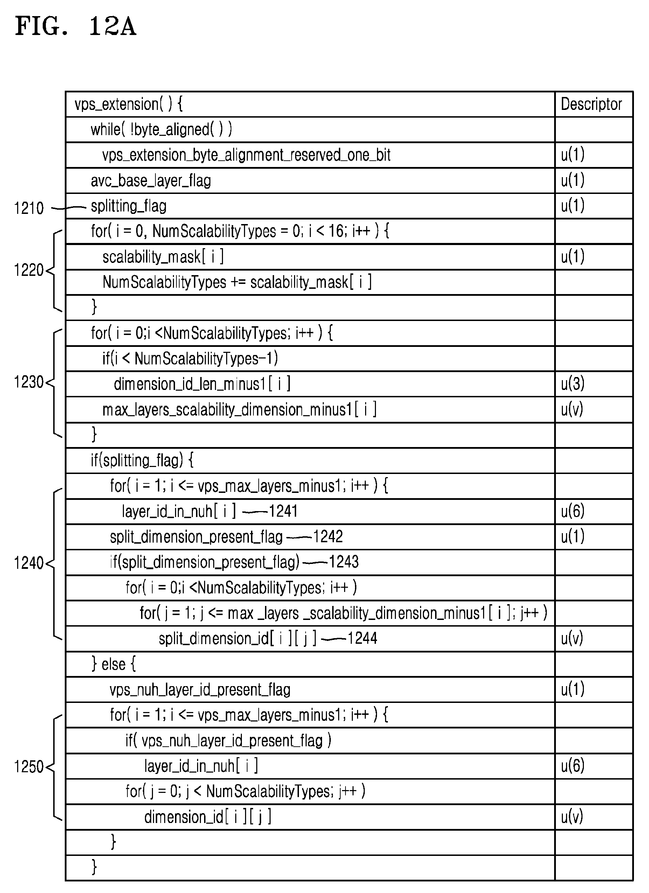

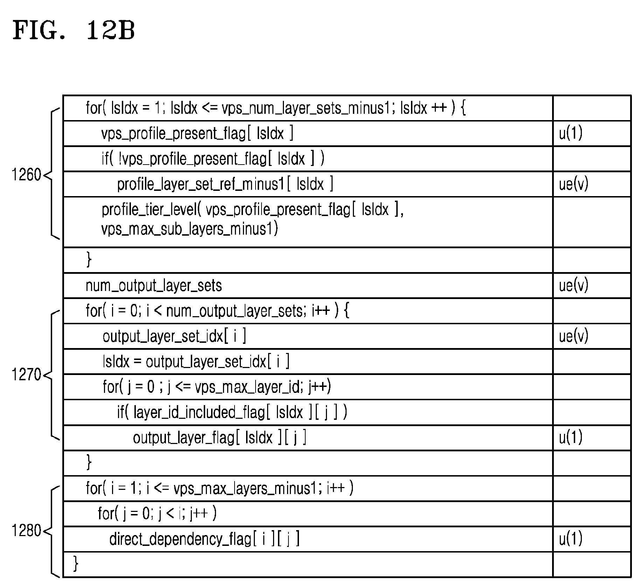

A VPS extension syntax for signaling between a coding apparatus and a decoding apparatus according to an embodiment of the present invention will now be described with reference to FIGS. 12A and 12B.

Splitting_flag 1210 is a flag representing whether to determine a scalability ID by using the values of ID parts into which a bit expression of a layer ID is split. For example, when the value of Splitting_flag 1210 is 1, the decoding apparatus determines a scalability ID by using the values of ID parts into which a layer ID is split.

For example, when the value of Splitting_flag 1210 is 1, the decoding apparatus may obtain a scalability ID directly from the ID parts of the layer ID. Alternatively, when the value of 1210 is 1, the decoding apparatus may obtain a scalability ID by referring to other information by using the values of the ID parts of the layer ID. For example, the decoding apparatus may obtain a scalability ID by referring to split_dimension_id[i][j], which is a split dimension ID table that is referred to according to an arrangement order between the ID parts included in the layer ID, by using the ID parts of the layer ID.

A region 1220 of the syntax obtains information about a scalability type that is used. The decoding apparatus may receive the value of 16-bit Scalability_mask transmitted by the coding apparatus and determine which scalability type from among 16 scalability types is used. The decoding apparatus may also determine the number NumScalabilityTypes of scalability types that are used, by using the value of Scalability_mask. The order of scalability types expressed by Scalability_mask[[i] may be predetermined between the coding apparatus and the decoding apparatus or may be signalled separately.

A region 1230 of the syntax obtains, for each scalability type that is used, a bit length dimension_id_ien_minus1[i] of a dimension ID for expressing the scalability ID in each scalability type that is used. A value obtained from dimension_id_len_minus1[i] is obtained by subtracting 1 from the bit length of the dimension ID.

max_layers_scalability_dimension_minus1[i] indicates a maximum number of layers for a scalability dimension indicated by an i-th scalability mask. The number of bits that are used to express max_layers_ scalability_ dimension_minus1[i] is dimension_id_len_minus1 [i]+1. max_layers_scalability_dimension_minus1 may be used to inform a maximum number of layers for each scalability dimension type. This information may be usefully used during content information transmission or session negotiation.

A region 1240 of the syntax is a region for signaling pieces of information for generating a scalability ID when splitting_flag is 1.

When splitting_flag is 1, the coding apparatus signals layer IDs, the number of which is vps_max_layers_minus1, to the decoding apparatus, and thus values of layer IDs of NAL units corresponding to a current VPS NAL are signalled (1241).

Split_dimension_present_flag 1242 is a flag representing how to utilize ID parts into which a layer ID is split in order to signal a scalability ID between the coding apparatus and the decoding apparatus. When Split_ dimension_ present_flag is 1 (1243), the syntax indicates that split_dimension_id[i][j] 1244 is sequentially included in a bitstream.

In the syntax according to the embodiment illustrated in FIG. 12A, when Split_dimension_present_flag is 0, the scalability ID has, as the value thereof, the values of the ID parts into which the layer ID is split. When Split_dimension_present_flag is 1 (1243), the scalability ID is obtained by referring to a split dimension ID table obtained from split_dimension_id[i][j] 1244. The decoding apparatus may obtain a scalability ID value by referring to the split dimension ID table by using the order in which scalability types to be referred to appear in a scalability mask and the values of the ID parts into which the layer ID is split according to the order.

A region 1250 of the syntax is a syntax region for signaling pieces of information for obtaining a scalability ID when the value of splitting_flag is 0. The coding apparatus and the decoding apparatus signal a layer ID value for each layer and a dimension ID value of a scalability type for each layer. For example, values of layer IDs of NAL units corresponding to a VPS NAL unit are signalled according to the value of vps_nuh_layer_id_present_flag representing whether an i-th layer ID is included in the VPS NAL unit, and a dimension ID dimension_id[i][j] is signalled for each of the scalability types corresponding to the i-th layer ID.

A region 1260 of the syntax signals whether a profile and tier information for a layer are provided. When vps_profile_present_flag[lsIdx] is 1, a profile and tier information for a layer set lsIdx may be provided to a lsIdx-th profile_tier_level() syntax structure. When vps_profile_present_flag[lsIdx] is 0, the profile and the tier information may not be provided to the lsIdx-th profile_tier_level() syntax structure but may be inferred.

A region 1270 of the syntax signals an index of a layer set for an output layer set. output_layer_set_idx[i] specifies an index of a layer set for an i-th output layer set. When output_layer_flag[lsIdx][j] is 1, a j-th layer in an lsIdx-th output layer set is an output layer.

A region 1280 of the syntax is a syntax layer that signals a direct-referring layer. When direct_dependency_flag[i][j] is 0, a layer having an index j is not a direct-referring layer for a layer i. When direct_dependency_flag[i][j] is 1, the layer having an index j may be a direct-referring layer for a layer i. When direct_dependency_flag[i][j] is not provided for i and j ranging from 0 to MaxLayersMinus1, direct_dependency_flag[i][j] may be inferred to be 0.

A method in which a decoding apparatus determines a scalability ID by using IDs and flags obtained from a decoding apparatus by using the VPS extension syntax shown in FIGS. 12A and 12B will now be described.

The decoding apparatus may determine a scalability ID ScalabilityId[layerIdInVps][scalabilityMaskIndex] and a view ID ViewId[layerIdInNuh] as described below.

According to a first embodiment, when splitting_flag is 1 and split_dimension_present_flag is 1, the decoding apparatus may determine the scalability ID ScalabilityId[layerIdInVps][scalabilityMaskIndex] and the view ID ViewId[layerIdInNuh] by using a split dimension ID (split_dimension_id) table. The below table represents a pseudocode for the above embodiment.

[Table 2]

```
for (i = 0; i <= vps_max_layers_minus1; i++) {
  for( smIdx= 0, j =0; smIdx< 16; smIdx ++ )
    if( ( i ! = 0 ) && scalability_mask[smIdx] )
      ScalabilityId[i][smIdt] =
  split_dimension_id[smIdx][( layer_id_in_nuh[i] &
( (1 << ( dimension_id_len_minus1[j] + 1) - 1) >> dimBitOffset[j++] )]
      else
        ScalabilityId[i][smIdx] = 0
    ViewIdlayer_id_in_nuh[i]] ScalabilityId[i][0]
)
```

As in the pseudocode shown in Table 2, when the layer ID is not 0 and a value of a scalability mask exists, the decoding apparatus may determine the scalability ID ScalabilityId by referring to the split dimension ID (split_dimension_id) table. vps_max_layer_id indicates a maximum value of a layer ID nuh_layer_id that a NAL unit may have. vps_max_layers_minus1 is a value obtained by subtracting 1 from vps_max_layer_id.

As nul_layer_id, which is a layer ID in HEVC, is expressed as 6 bits, vps_max_layers_minus1 and vps_max_layer_id may each have a maximum value of 63.

The decoding apparatus may obtain a scalability ID ScalabilityId[i][smIdx] by using an smIdx-th scalability dimension type and the value of an ID part for the smIdx-th scalability dimension type in a layer ID of an i-th layer. ScalabilityId[i][smIdx] is a scalability dimension of the smIdx-th scalability dimension type of the i-th layer. ScalabilityId[i][smIdx] may be calculated using Equation 6:

【Equation 6】

$$ScalabilityId[i][smIdx] = split\_dimension\_id[smIdx][( layer\_id\_in\_nuh[i] \& ( (1 << ( dimension\_id\_len\_minus1[j] + 1) - 1) >> dimBitOffset[j] ) )]$$

where (layer_id_in_nuh[i]&((1<<(dimension_id_len minus1[j]+1)-1)>>dimBitOffset[j])) indicates an equation for obtaining the value of an ID part for a scalability dimension type in an i-th layer ID. The value of a particular ID part of a layer ID may be represented by performing a "and" operation on the layer ID and a bit value representing a bit location assigned an ID part for a particular scalability type in a scalability layer ID.

dimBitOffset[j] is calculated using Equation 7:

【Equation 7】

$$dimBitOffset[j] = \sum_{dimIdx=0}^{j-1} (dimension\_id\_len\_minus1[dimIdx]+1)$$

where dimension_id_len_minus1[j] is obtained by subtracting 1 from a bit length of an ID part representing a j-th scalability dimension type in the layer ID. Thus, dimBitOffset[j] is an index indicating a bit start location of the j-th scalability dimension type in the layer ID.

The value dimension_id_len_minus1of a scalability dimension type arranged in the last order in the layer ID may be determined using a sum of the lengths of ID parts allocated to the other scalability dimension types arranged in the layer ID. For example, the value dimension_id_len_minus1of the scalability dimension type arranged in the last order in the layer ID may be calculated by subtracting the sum of the lengths of the ID parts allocated to the other scalability dimension types arranged in the layer ID from the bit length of the layer ID. For example, when the bit length of the layer ID is 6 and the MSB of a bit offset in the layer ID has an index of 0, the value of:

dimension_id_len_minus1(dimension_id_len_minus1[NumScalabilityTypes-1])

of the scalability type arranged in the last order in the layer ID may be determined to be 5 - dimBitOffset[NumScalabilityTypes-1]. To allocate a scalability ID via splitting of the layer ID, the value of dimBitOffset[NumScalabilityTypes] may be required to be smaller than the bit length of the layer ID. For example, when the bit length of the layer ID is 6, dimBitOffset[NumScalabilityTypes] may be set to 6. When NumScalabilityTypes is greater than 0, dimension_id_len_minus1 of the scalability dimension types may be set such that dimBitOffset[NumScalabilityTypes-1] is smaller than 6.

According to a second embodiment, when splitting_flag is 1 and split_dimension_present_flag is 0, the decoding apparatus directly determines the scalability ID ScalabilityId[layerIdInVps][scalabilityMaskIndex] and the view ID ViewId[layerIdInNuh] from the layer ID iayer_id_in_nuh[] as in a pseudocode shown in the table below.

[Table 3]

```
for (i = 0; i <= vps_max_layers_minus1; i++) {
  for( smIdx= 0, j =0: smIdx< 16; smIdx ++ )
    if( ( i ! = 0 ) && scalability_mask|smIdx| )
      ScalabilityId[i][smIdx] = ( layer_id_in_nuh[i] &
( (1 << ( dimension_id_len_minus1[j] + 1) - 1) >> dimBitOffset[j++]) )
    else
      ScalabilityId[i][smIdx] = 0
  ViewId[layer_id_in_nuh[i] = ScalabilityId[i][0]
}
```

As shown in the above pseudocode, the scalability ID of the smIdx-th scalability dimension type of the i-th layer is a particular part ID of the layer ID of the i-th layer. The value of a particular ID part of a layer ID may be represented by performing a "and" operation on the layer ID and a bit value representing a bit location assigned an ID part for a particular scalability type in a scalability layer ID.

According to the first and second embodiments, when splitting_flag is 1, the decoding apparatus may determine dimension_id_len_minus1[NumScalabilityTypes - 1] from dimBitOffset[NumScalabilityTypes - 1] as shown in Equation 8:

【Equation 8】

$$dimension\_id\_len\_minus1[NumScalabilityTypes - 1] = 6 - dimBitOffset[NumScalabilityTypes - 1]$$

According to a third embodiment, the decoding apparatus determines ScalabilityId[layerIdInVps][scalabilityMaskIndex] and ViewId[layerIdInNuh] from dimension_id[][] when splitting_flag is 0. dimension_id[i][j] indicates a scalability dimension ID for a j-th scalability type of an i-th layer. The number of bits that are used to express dimension_id[i][j] is dimension_id_len_minus1[i]+1.

The below table represents a pseudocode for the above embodiment.

[Table 4]

```
for (i = 0; i <= vps_max_layers_minus1; i++) {
  for( smId= 0, j =0: smIdx< 16; smIdx ++ )
    if( ( i ! = 0 ) && scalability_mask[smIdx] )
  ScalabilityId[i][smIdx] = (dimension_id[i][j++]
    else
      ScalabilityId[i][smIdx] = 0
  ViewId[layer_id_in_nuh[i]] = ScalabilityId[i][0]
  }
```

A process in which the decoding apparatus determines the value of a scalability ID by using the values of ID parts into which a layer ID is split according to the second embodiment may be performed using a particular bit value of layer_id_in_nuh[i] as the value of dimension_id[i][j] according to the third embodiment.

For example, when splitting_flag is 1, the decoding apparatus may use the particular bit value of layer_id_in_nuh[i] as the value of dimension_id[i][j]. A detailed equation for obtaining the value of dimension_id[i][j] is as follows.

【Equation 9】

$$dimension\_id[i][j] =( ( layer\_id\_in\_nuh[i] \& ( (1 \ll dimBitOffset[j + 1] ) - 1) ) \gg dimBitOffset[j] )$$

where i has a value ranging from 0 to MaxLayersMinus1 and j has a value ranging from 0 to NumScalabilityTypes-1. dimBitOffset[0] is set to be 0, and j is set to a value ranging from 1 to NumScalabilityTypes-1. dimBitOffset[j] is obtained as follows.

【Equation 10】

$$dimBitOffset[j]= \sum_{\mathrm{dim}Idx=0}^{j-1} (dimension\_id\_len\_minus1[dimIdx]+1 )$$

The value of dimension_id_len_minus1[NumScalabilityTypes - 1] may be determined to be a value obtained by subtracting dimBitOffset[NumScalabilityTypes - 1] from a bit length of the layer ID.

Video coding and decoding techniques based on a coding unit having a tree structure will now be described with reference to FIGS. 13 through 25. The video coding and decoding techniques based on a coding unit having a tree structure which will be described below are related with the coding/decoding of the pictures included in a multi-layer video which are performed in the video coder 11 of the video coding apparatus 10 of FIG. 1 and the video decoder 1120 of the video decoding apparatus 1100 of FIG. 11.

FIG. 13 is a block diagram of a video encoding apparatus 100 based on coding units according to a tree structure, according to one or more embodiments.

The video encoding apparatus 100 involving video prediction based on coding units according to a tree structure includes a LCU splitter 110, a coding unit determiner 120, and an outputter 130. For convenience of explanation, the video encoding apparatus 100 involving video prediction based on coding units according to a tree structure will be referred to as the video encoding apparatus 100.

The LCU splitter 110 may split a current picture based on a LCU that is a coding unit having a maximum size for a current picture of an image. If the current picture is larger than the LCU, image data of the current picture may be split into the at least one LCU. The LCU according to one or more embodiments may be a data unit having a size of 32×32, 64×64, 128×128, 256×256, etc., wherein a shape of the data unit is a square having a width and length in squares of 2. The image data may be output to the coding unit determiner 120 according to the at least one LCU.

A coding unit according to one or more embodiments may be characterized by a maximum size and a depth. The depth denotes the number of times the coding unit is spatially split from the LCU, and as the depth deepens, deeper coding units according to depths may be split from the LCU to a smallest coding unit (SCU). A depth of the LCU is an uppermost depth and a depth of the SCU is a lowermost depth. Since a size of a coding unit corresponding to each depth decreases as the depth of the LCU deepens, a coding unit corresponding to an upper depth may include a plurality of coding units corresponding to lower depths.

As described above, the image data of the current picture is split into the LCUs according to a maximum size of the coding unit, and each of the LCUs may include deeper coding units that are split according to depths. Since the LCU according to one or more embodiments is split according to depths, the image data of the space domain included in the LCU may be hierarchically classified according to depths.

A maximum depth and a maximum size of a coding unit, which limit the total number of times a height and a width of the LCU are hierarchically split, may be predetermined.

The coding unit determiner 120 encodes at least one split region obtained by splitting a region of the LCU according to depths, and determines a depth to output a finally encoded image data according to the at least one split region. In other words, the coding unit determiner 120 determines a coding depth by encoding the image data in the deeper coding units according to depths, according to the LCU of the current picture, and selecting a depth having the least encoding error. The determined coding depth and image data of each LCU are output to the outputter 130.

The image data in the LCU is encoded based on the deeper coding units corresponding to at least one depth equal to or below the maximum depth, and results of encoding based on each of the deeper coding units are compared. A depth having the least encoding error may be selected after comparing encoding errors of the deeper coding units. At least one coding depth may be selected for each LCU.

A coding unit is hierarchically split according to depths, and the number of coding units increases. Also, even if coding units correspond to the same depth in one LCU, it is determined whether to split each of the coding units corresponding to the same depth to a lower depth by measuring an encoding error of the image data of the each coding unit, separately. Accordingly, even when image data is included in one LCU, the encoding errors may differ according to regions in the one LCU, and thus the coding depths may differ according to regions in the image data. Thus, one or more coding depths may be determined in one LCU, and the image data of the LCU may be divided according to coding units of at least one coding depth.

Accordingly, the coding unit determiner 120 may determine coding units having a tree structure included in the LCU. The 'coding units having a tree structure' according to one or more embodiments include coding units corresponding to a depth determined to be the coding depth, from among all deeper coding units included in the LCU. A coding unit of a coding depth may be hierarchically determined according to depths in the same region of the LCU, and may be independently determined in different regions. Similarly, a coding depth in a current region may be independently determined from a coding depth in another region.

A maximum depth according to one or more embodiments is an index related to the number of splitting times from a LCU to an SCU. A first maximum depth according to one or more embodiments may denote the total number of splitting times from the LCU to the SCU. A second maximum depth according to one or more embodiments may denote the total number of depth levels from the LCU to the SCU. For example, when a depth of the LCU is 0, a depth of a coding unit, in which the LCU is split once, may be set to 1, and a depth of a coding unit, in which the LCU is split twice, may be set to 2. In this case, if the SCU is a coding unit in which the LCU is split four times, 5 depth levels of depths 0, 1, 2, 3, and 4 exist, and thus the first maximum depth may be set to 4, and the second maximum depth may be set to 5.

Prediction encoding and transformation may be performed according to the LCU. The prediction encoding and the transformation are also performed based on the deeper coding units according to a depth equal to or depths less than the maximum depth, according to the LCU.

Since the number of deeper coding units increases whenever the LCU is split according to depths, encoding, including the prediction encoding and the transformation, is performed on all of the deeper coding units generated as the depth deepens. For convenience of description, the prediction encoding and the transformation will now be described based on a coding unit of a current depth, in at least one LCU.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the LCU, the prediction encoding may be performed based on a coding unit corresponding to a coding depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit and a data unit obtained by splitting at least one of a height and a width of the prediction unit. A partition is a data unit where a prediction unit of a coding unit is split, and a prediction unit may be a partition having the same size as a coding unit.

For example, when a coding unit of 2N×2N (where N is a positive integer) is no longer split and becomes a prediction unit of 2N×2N, and a size of a partition may be 2N×2N, 2N×N, N×2N, or N×N. Examples of a partition type include symmetrical partitions obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, an inter mode, and a skip mode. For example, the intra mode or the inter mode may be performed on the partition of 2N×2N, 2N×N, N×2N, or N×N. Also, the skip mode may be performed only on the partition of 2N×2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a transformation unit having a size smaller than or equal to the coding unit. For example, the transformation unit may include a data unit for an intra mode and a transformation unit for an inter mode.

The transformation unit in the coding unit may be recursively split into smaller sized regions in the similar manner as the coding unit according to the tree structure. Thus, residues in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2N×2N, a transformation depth may be 0 when the size of a transformation unit is 2N×2N, may be 1 when the size of the transformation unit is N×N, and may be 2 when the size of the transformation unit is N/2×N/2. In other words, the transformation unit having the tree structure may be set according to the transformation depths.

Encoding information according to coding units corresponding to a depth requires not only information about the coding depth, but also about information related to prediction encoding and transformation. Accordingly, the coding unit determiner 120 not only determines a coding depth having a least encoding error, but also determines a partition type in a prediction unit, a prediction mode according to prediction units, and a size of a transformation unit for transformation.

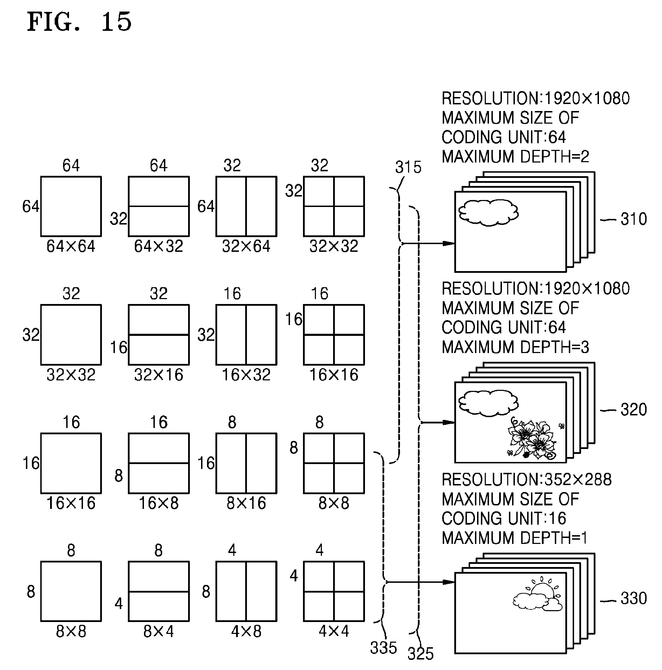

Coding units according to a tree structure in a LCU and methods of determining a prediction unit/partition, and a transformation unit, according to one or more embodiments, will be described in detail below with reference to FIGS. 15 through 25.

The coding unit determiner 120 may measure an encoding error of deeper coding units according to depths by using Rate-Distortion Optimization based on Lagrangian multipliers.

The outputter 130 outputs the image data of the LCU, which is encoded based on the at least one coding depth determined by the coding unit determiner 120, and information about the encoding mode according to the depth, in bitstreams.

The encoded image data may be obtained by encoding residues of an image.

The information about the encoding mode according to depth may include information about the coding depth, about the partition type in the prediction unit, the prediction mode, and the size of the transformation unit.

The information about the coding depth may be defined by using splitting information according to depths, which indicates whether encoding is performed on coding units of a lower depth instead of a current depth. If the current depth of the current coding unit is the coding depth, image data in the current coding unit is encoded and output, and thus the splitting information may be defined not to split the current coding unit to a lower depth. On the other hand, if the current depth of the current coding unit is not the coding depth, the encoding needs to be performed on the coding unit of the lower depth, and thus the splitting information may be defined to split the current coding unit of the current depth to obtain the coding units of the lower depth.

If the current depth is not the coding depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one LCU, and information about at least one encoding mode is determined for each coding unit of a depth, information about at least one encoding mode may be determined for one LCU. Also, a coding depth of the image data of the LCU may be different according to locations since the image data is hierarchically split according to depths, and thus information about a coding depth and an encoding mode may be set for the image data.

Accordingly, the outputter 130 may assign encoding information about a corresponding coding depth and a corresponding encoding mode to at least one of the coding unit, the prediction unit, and a minimum unit included in the LCU.

The minimum unit according to one or more embodiments is a square data unit obtained by splitting the SCU constituting the lowermost coding depth by 4. Alternatively, the minimum unit according to an embodiment may be a maximum-size square data unit that may be included in all of the coding units, prediction units, partition units, and transformation units included in the LCU.

For example, the encoding information output by the outputter 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set.

In the video encoding apparatus 100, the deeper coding unit may be a coding unit obtained by dividing a height or width of a coding unit of an upper depth, which is one layer above, by two. In other words, when the size of the coding unit of the current depth is 2N×2N, the size of the coding unit of the lower depth is N×N. Also, the coding unit with the current depth having a size of 2N×2N may include a maximum of 4 coding units with the lower depth.

Accordingly, the video encoding apparatus 100 may form the coding units having the tree structure by determining coding units having an optimum shape and an optimum size for each LCU, based on the size of the LCU and the maximum depth that have been determined considering characteristics of the current picture. Also, since encoding may be performed on each LCU by using any one of various prediction modes and transformations, an optimum encoding mode may be determined considering characteristics of the coding unit of various image sizes.

Thus, if an image having a high resolution or a large data amount is encoded in units of conventional macroblocks, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit in consideration of a size of the image.

FIG. 2 is a block diagram of a video decoding apparatus 200 based on coding units having a tree structure, according to one or more embodiments.

The video decoding apparatus 200 that involves video prediction based on coding units having a tree structure includes a receiver 210, an image data and encoding information extractor 220, and an image data decoder 230. For convenience of explanation, the video decoding apparatus 200 involving video prediction based on coding units according to a tree structure will be referred to as the video decoding apparatus 200.

Definitions of various terms, such as a coding unit, a depth, a prediction unit, a transformation unit, and information about various encoding modes, for decoding operations of the video decoding apparatus 200 are identical to those described with reference to the video encoding apparatus 100 of FIG. 1.

The receiver 210 receives and parses a bitstream of an encoded video. The image data and encoding information extractor 220 extracts encoded image data for each coding unit from the parsed bitstream, wherein the coding units have a tree structure according to each LCU, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coding depth and an encoding mode for the coding units having a tree structure according to each LCU, from the parsed bitstream. The extracted information about the coding depth and the encoding mode are output to the image data decoder 230. In other words, the image data in a bit stream is split into the LCU so that the image data decoder 230 decodes the image data for each LCU.

The information about the coding depth and the encoding mode according to the LCU may be set for at least one piece of coding depth information, and information about an encoding mode according to the coding depth may include information about a partition mode of a corresponding coding unit corresponding to the depth, information about a prediction type, and size information of a transformation unit. Also, splitting information according to depths may be extracted as the coding depth information.

The information about the coding depth and the encoding mode according to the LCU extracted by the image data and encoding information extractor 220 is information about a coding depth and an encoding mode determined to generate a minimum encoding error when an encoder, such as the video encoding apparatus 100, repeatedly performs encoding for each deeper coding unit according to depths according to each LCU. Accordingly, the video decoding apparatus 200 may reconstruct an image by decoding the image data according to an encoding mode that generates the minimum encoding error.

Since the information about the coding depth and the encoding mode may be assigned to a predetermined data unit from among a corresponding coding unit, a prediction unit, and a minimum unit, the image data and encoding information extractor 220 may extract the information about the coding depth and the encoding mode according to the predetermined data units. If information about a coding depth and an encoding mode of a corresponding LCU is recorded according to predetermined data units, the predetermined data units to which the same information about a coding depth and an encoding mode is assigned may be inferred to be the data units included in the same LCU.

The image data decoder 230 reconstructs the current picture by decoding the image data in each LCU based on the information about the coding depth and the encoding mode according to the LCUs. In other words, the image data decoder 230 may decode the encoded image data based on the extracted information about the partition type, the prediction mode, and the transformation unit for each coding unit from among the coding units having the tree structure included in each LCU. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each LCU. Via the inverse transformation, a pixel value of the space domain of the coding unit may be reconstructed.

The image data decoder 230 may determine a coding depth of a current LCU by using splitting information according to depths. If the splitting information indicates that image data is no longer split in the current depth, the current depth is the coding depth. Accordingly, the image data decoder 230 may decode encoded image data in the current LCU by using the information about the partition mode of the prediction unit, the information about the prediction type, and the size information of the transformation unit for a coding unit corresponding to the current depth.

In other words, data units containing the encoding information including the same splitting information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

Finally, the video decoding apparatus 200 may acquire information about a coding unit having a least encoding error by recursively coding each LCU during coding, and may use the acquired information in decoding a current picture. In other words, coded image data of coding units having a tree structure determined as an optimal coding unit for each LCU may be decoded.

Thus, even an image having a high resolution or having an excessively larger amount of data may be restored by efficiently decoding image data according to the size of a coding unit adaptively determined according to the characteristics of the image and a coding mode by using information about an optimal coding mode transmitted by an encoder.

FIG. 15 is a diagram for describing a concept of coding units according to one or more embodiments.

A size of a coding unit may be expressed by width × height, and may be 64×64, 32×32, 16×16, and 8×8. A coding unit of 64×64 may be split into partitions of 64×64, 64×32, 32×64, or 32×32, and a coding unit of 32×32 may be split into partitions of 32×32, 32×16, 16×32, or 16×16, a coding unit of 16×16 may be split into partitions of 16×16, 16×8, 8×16, or 8×8, and a coding unit of 8×8 may be split into partitions of 8×8, 8×4, 4×8, or 4×4.

In video data 310, a resolution is 1920×1080, a maximum size of a coding unit is 64, and a maximum depth is 2. In video data 320, a resolution is 1920×1080, a maximum size of a coding unit is 64, and a maximum depth is 3. In video data 330, a resolution is 352×288, a maximum size of a coding unit is 16, and a maximum depth is 1. The maximum depth shown in FIG. 15 denotes a total number of splits from a LCU to an SCU.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a LCU having a long axis size of 64, and coding units having long axis sizes of 32 and 16 since depths are deepened to two layers by splitting the LCU twice. Since the maximum depth of the video data 330 is 1, coding units 335 of the video data 330 may include coding units having a long axis size of 16, and coding units having a long axis size of 8 since depths are deepened to one layer by splitting the LCU once.

Since the maximum depth of the video data 320 is 3, coding units 325 of the video data 320 may include a LCU having a long axis size of 64, and coding units having long axis sizes of 32, 16, and 8 since the depths are deepened to 3 layers by splitting the LCU three times. As a depth deepens, detailed information may be precisely expressed.

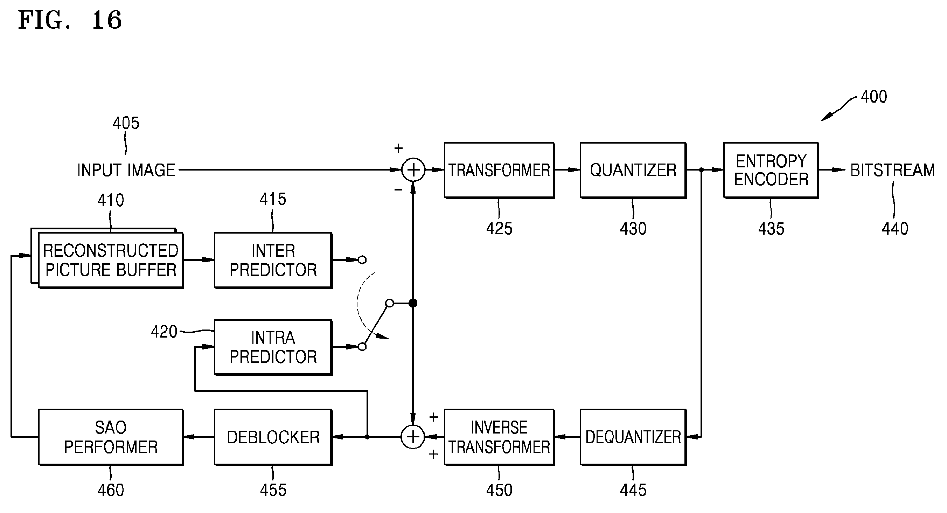

FIG. 16 is a block diagram of an image encoder 400 based on coding units, according to one or more embodiments.

The image encoder 400 performs operations necessary for encoding image data in the coding unit determiner 120 of the video encoding apparatus 100. In other words, an intra predictor 420 performs intra prediction on coding units in an intra mode according to prediction units, from among a current frame 405, and an inter predictor 415 performs inter prediction on coding units in an inter mode by using the current image 405 and a reference image obtained from a reconstructed picture buffer 410 according to prediction units. The current image 405 may be split into LCUs and then the LCUs may be sequentially encoded. In this regard, the LCUs that are to be split into coding units having a tree structure may be encoded.

Residue data is generated by removing prediction data regarding coding units of each mode that is output from the intra predictor 420 or the inter predictor 415 from data regarding encoded coding units of the current image 405, and is output as a quantized transformation coefficient according to transformation units through a transformer 425 and a quantizer 430. The quantized transformation coefficient is reconstructed as the residue data in a space domain through a dequantizer 445 and an inverse transformer 450. The reconstructed residue data in the space domain is added to prediction data for coding units of each mode that is output from the intra predictor 420 or the inter predictor 415 and thus is reconstructed as data in a space domain for coding units of the current image 405. The reconstructed data in the space domain is generated as reconstructed images through a de-blocker 455 and an SAO performer 460, and the reconstructed images are stored in the reconstructed picture buffer 410. The reconstructed images stored in the reconstructed picture buffer 410 may be used as reference images for inter prediction of another image. The transformation coefficient quantized by the transformer 425 and the quantizer 430 may be output as a bitstream 440 through an entropy encoder 435.

In order for the image encoder 400 to be applied in the video encoding apparatus 100, all elements of the image encoder 400, i.e., the inter predictor 415, the intra predictor 420, the transformer 425, the quantizer 430, the entropy encoder 435, the dequantizer 445, the inverse transformer 450, the de-blocker 455, and the SAO performer 460, perform operations based on each coding unit among coding units having a tree structure according to each LCU.

In particular, the intra predictor 420 and the inter predictor 415 may determine a partition mode and a prediction mode of each coding unit among the coding units having a tree structure in consideration of a maximum size and a maximum depth of a current LCU, and the transformer 425 may determine whether to split a transformation unit having a quad tree structure in each coding unit among the coding units having a tree structure.

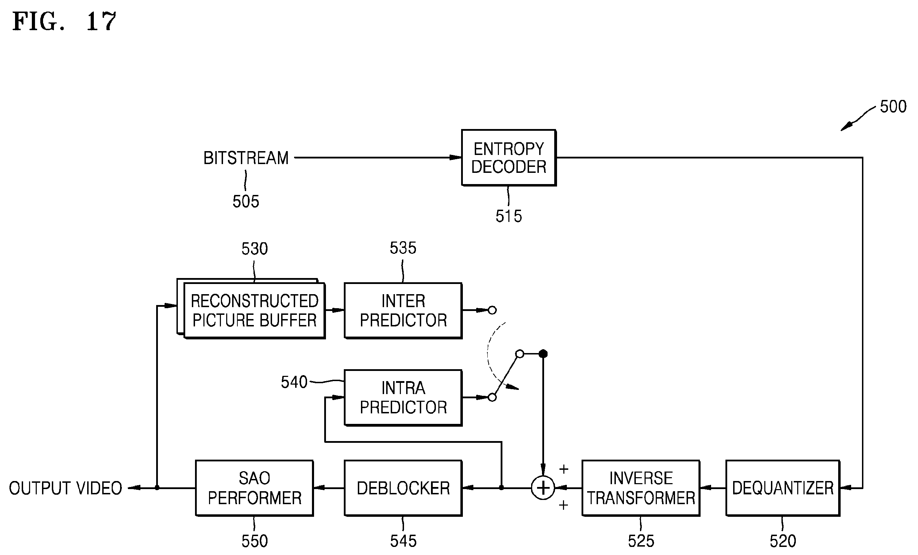

FIG. 17 is a block diagram of an image decoder 500 based on coding units, according to one or more embodiments.

An entropy decoder 515 parses encoded image data to be decoded and information about encoding required for decoding from a bitstream 505. The encoded image data is a quantized transformation coefficient from which residue data is reconstructed by a dequantizer 520 and an inverse transformer 525.

An intra predictor 540 performs intra prediction on coding units in an intra mode according to each prediction unit. An inter predictor 535 performs inter prediction on coding units in an inter mode from among the current image 405 for each prediction unit by using a reference image obtained from a reconstructed picture buffer 530.

Prediction data and residue data regarding coding units of each mode, which passed through the intra predictor 540 or the inter predictor 535, are summed, and thus data in a space domain regarding coding units of the current image 405 may be reconstructed, and the reconstructed data in the space domain may be output as a reconstructed image 560 through a de-blocker 545 and an SAO performer 550. Reconstructed images stored in the reconstructed picture buffer 530 may be output as reference images.

In order to decode the image data in the image data decoder 230 of the video decoding apparatus 200, operations after the entropy decoder 515 of the image decoder 500 according to an embodiment may be performed.

In order for the image decoder 500 to be applied in the video decoding apparatus 200 according to an embodiment, all elements of the image decoder 500, i.e., the entropy decoder 515, the dequantizer 520, the inverse transformer 525, the intra predictor 540, the inter predictor 535, the de-blocker 545, and the SAO performer 550 may perform operations based on each of coding units having a tree structure for each LCU.

In particular, the intra predictor 540 and the inter predictor 535 may determine a partition mode and a prediction mode for each of the coding units having a tree structure, and the inverse transformer 525 may determine whether to split a transformation unit having a quad tree structure for each of the coding units.

The coding operation of FIG. 16 and the decoding operation of FIG. 17 respectively correspond to video stream coding and decoding operations in a single layer. Thus, when an encoder 12 of FIG. 1A codes a video stream of at least two layers, each layer includes the image encoder 400. Similarly, when a decoder 26 of FIG. 2A decodes a video stream of at least two layers, each layer includes the image decoder 500.

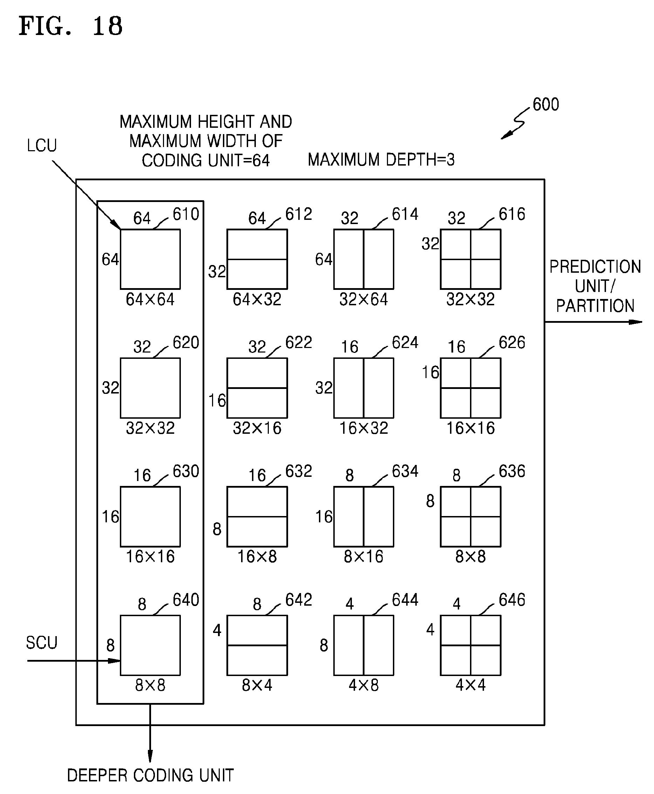

FIG. 18 is a diagram illustrating deeper coding units according to depths, and partitions, according to one or more embodiments.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a layer structure 600 of coding units, according to one or more embodiments, the maximum height and the maximum width of the coding units are each 64, and the maximum depth is 3. In this case, the maximum depth refers to a total number of times the coding unit is split from the LCU to the SCU. Since a depth deepens along a vertical axis of the layer structure 600, a height and a width of the deeper coding unit are each split. Also, a prediction unit and partitions, which are bases for prediction encoding of each deeper coding unit, are shown along a horizontal axis of the layer structure 600.

In other words, a coding unit 610 is a LCU in the layer structure 600, wherein a depth is 0 and a size, i.e., a height by width, is 64×64. The depth deepens along the vertical axis, and a coding unit 620 having a size of 32×32 and a depth of 1, a coding unit 630 having a size of 16×16 and a depth of 2, and a coding unit 640 having a size of 8×8 and a depth of 3 exist. The coding unit 640 having a size of 8×8 and a depth of 3 is an SCU.

The prediction unit and the partitions of a coding unit are arranged along the horizontal axis according to each depth. In other words, if the coding unit 610 having a size of 64×64 and a depth of 0 is a prediction unit, the prediction unit may be split into partitions included in the encoding unit 610, i.e. a partition 610 having a size of 64×64, partitions 612 having the size of 64×32, partitions 614 having the size of 32×64, or partitions 616 having the size of 32×32.

Similarly, a prediction unit of the coding unit 620 having the size of 32×32 and the depth of 1 may be split into partitions included in the coding unit 620, i.e. a partition 620 having a size of 32×32, partitions 622 having a size of 32×16, partitions 624 having a size of 16×32, and partitions 626 having a size of 16×16.

Similarly, a prediction unit of the coding unit 630 having the size of 16×16 and the depth of 2 may be split into partitions included in the coding unit 630, i.e. a partition 630 having a size of 16×16, partitions 632 having a size of 16×8, partitions 634 having a size of 8×16, and partitions 636 having a size of 8×8.

Similarly, a prediction unit of the coding unit 640 having the size of 8×8 and the depth of 3 may be split into partitions included in the coding unit 640, i.e. a partition 640 having a size of 8×8, partitions 642 having a size of 8×4, partitions 644 having a size of 4×8, and partitions 646 having a size of 4×4.

Finally, the coding unit 640 having a size of 8×8 and a depth of 3 is an SCU and has a lowermost depth.

In order to determine a coding depth of the coding units constituting the LCU 610, the coding unit determiner 120 of the video encoding apparatus 100 performs encoding for coding units corresponding to each depth included in the LCU 610.

The number of deeper coding units according to depths for including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, one coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the layer structure 600. Alternatively, the minimum encoding error may be searched for by comparing the least encoding errors according to depths, by performing encoding for each depth as the depth deepens along the vertical axis of the layer structure 600. A depth and a partition having the minimum encoding error in the LCU 610 may be selected as the coding depth and a partition type of the LCU 610.

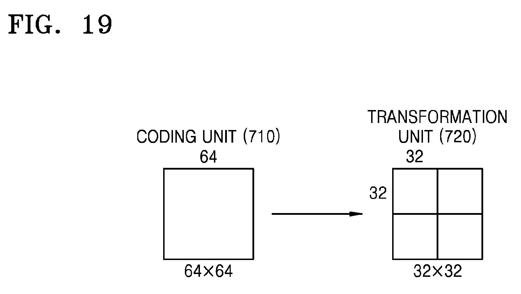

FIG. 19 is a diagram for describing a relationship between a coding unit 710 and transformation units 720, according to one or more embodiments.

The video encoding apparatus 100 or the video decoding apparatus 200 encodes or decodes an image according to coding units having sizes smaller than or equal to a LCU for each LCU. Sizes of transformation units for transformation during encoding may be selected based on data units that are not larger than a corresponding coding unit.

For example, in the video encoding apparatus 100 or the video decoding apparatus 200, if a size of the coding unit 710 is 64×64, transformation may be performed by using the transformation units 720 having a size of 32×32.

Also, data of the coding unit 710 having the size of 64×64 may be encoded by performing the transformation on each of the transformation units having the size of 32×32, 16×16, 8×8, and 4×4, which are smaller than 64×64, and then a transformation unit having the least coding error may be selected.

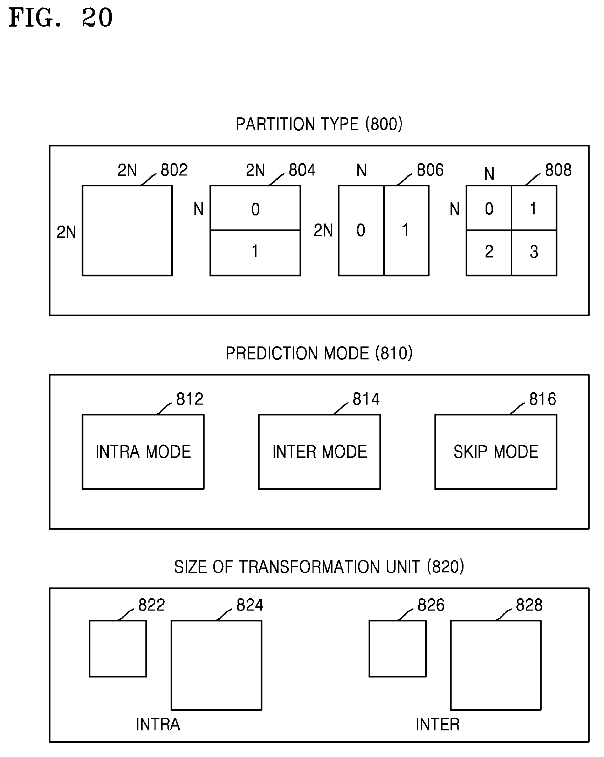

FIG. 20 is a diagram for describing encoding information of coding units corresponding to a depth, according to one or more embodiments.

The outputter 130 of the video encoding apparatus 100 may encode and transmit information 800 about a partition type, information 810 about a prediction mode, and information 820 about a size of a transformation unit for each coding unit corresponding to a coding depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2N×2N may be split into any one of a partition 802 having a size of 2N×2N, a partition 804 having a size of 2N×N, a partition 806 having a size of N×2N, and a partition 808 having a size of N×N. Here, the information 800 about the partition type is set to indicate one of the partition 804 having a size of 2N×N, the partition 806 having a size of N×2N, and the partition 808 having a size of N×N.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

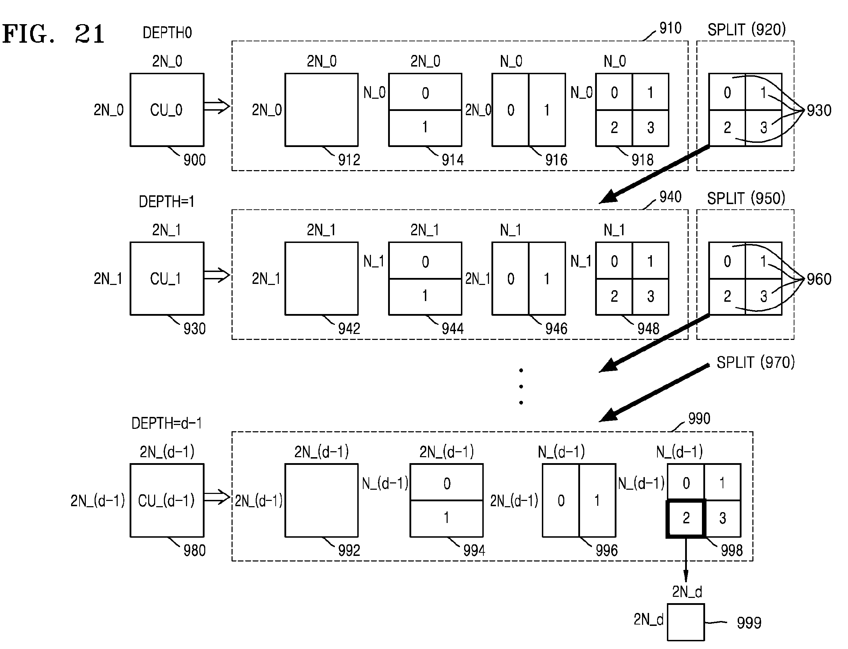

FIG. 21 is a diagram of deeper coding units according to depths, according to one or more embodiments.

Splitting information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0×2N_0 may include partitions of a partition type 912 having a size of 2N_0×2N_0, a partition type 914 having a size of 2N_0×N_0, a partition type 916 having a size of N_0×2N_0, and a partition type 918 having a size of N_0×N_0. FIG. 21 only illustrates the partition types 912 through 918 which are obtained by symmetrically splitting the prediction unit 910, but a partition type is not limited thereto, and the partitions of the prediction unit 910 may include asymmetrical partitions, partitions having an arbitrary shape, and partitions having a geometrical shape.

Prediction encoding is repeatedly performed on one partition having a size of 2N_0×2N_0, two partitions having a size of 2N_0×N_0, two partitions having a size of N_0×2N_0, and four partitions having a size of N_0×N_0, according to each partition type. The prediction encoding in an intra mode and an inter mode may be performed on the partitions having the sizes of 2N_0×2N_0, N_0×2N_0, 2N_0×N_0, and N_0×N_0. The prediction encoding in a skip mode is performed only on the partition having the size of 2N_0×2N_0.

If an encoding error is smallest in one of the partition modes 912 through 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of N_0×N_0 to search for a minimum encoding error.

A prediction unit 940 for prediction encoding the coding unit 930 having a depth of 1 and a size of 2N_1×2N_1 (=N_0×N_0) may include partitions of a partition type 942 having a size of 2N_1×2N_1, a partition type 944 having a size of 2N_1×N_1, a partition type 946 having a size of N_1×2N_1, and a partition type 948 having a size of N_1 xN_1.

If an encoding error is the smallest in the partition type 948, a depth is changed from 1 to 2 to split the partition type 948 in operation 950, and encoding is repeatedly performed on coding units 960, which have a depth of 2 and a size of N_2×N_2, to search for a minimum encoding error.

When a maximum depth is d, an encoding unit according to each depth may be set as up to when a depth becomes d-1, and splitting information may be set as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)×2N_(d-1) may include partitions of a partition type 992 having a size of 2N_(d-1)×2N_(d-1), a partition type 994 having a size of 2N_(d-1)×N_(d-1), a partition type 996 having a size of N_(d-1)×2N_(d-1), and a partition type 998 having a size of N_(d-1)×N_(d-1).

Prediction encoding may be repeatedly performed on one partition having a size of 2N_(d-1)×2N_(d-1), two partitions having a size of 2N_(d-1)×N_(d-1), two partitions having a size of N_(d-1)×2N_(d-1), and four partitions having a size of N_(d-1)×N_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coding depth for the coding units constituting a current LCU 900 is determined to be d-1 and a partition type of the current LCU 900 may be determined to be N_(d-1)×N_(d-1). Also, since the maximum depth is d, splitting information for the coding unit 952 is not set.

A data unit 999 may be a 'minimum unit' for the current LCU. A minimum unit according to one or more embodiments may be a square data unit obtained by splitting an SCU having a lowest coding depth by 4. By performing the encoding repeatedly, the video encoding apparatus 100 may select as a coding depth a depth having the least encoding error by comparing encoding errors according to depths of the coding unit 900 to determine a depth, and set a corresponding partition type and a prediction mode as an encoding mode of the coding depth.

As such, the minimum encoding errors according to depths are compared in all of the depths of 1 through d, and a depth having the least encoding error may be determined as a coding depth. The coding depth, the partition type of the prediction unit, and the prediction mode may be encoded and transmitted as information about an encoding mode. Also, since a coding unit is split from a depth of 0 to the coding depth, only splitting information of the coding depth is set to 0, and splitting information of depths excluding the coding depth is set to 1.

The image data and encoding information extractor 220 of the video decoding apparatus 200 may extract and use the information about the coding depth and the prediction unit of the coding unit 900 to decode the coding unit 912. The video decoding apparatus 200 may determine a depth, in which splitting information is 0, as a coding depth by using splitting information according to depths, and use information about an encoding mode of the corresponding depth for decoding.

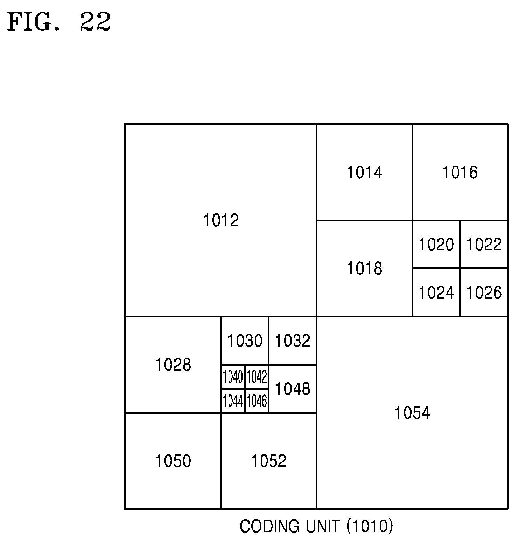

FIGS. 22, 23, and 24 are diagrams for describing a relationship between coding units 1010, prediction units 1060, and transformation units 1070, according to one or more embodiments.

The coding units 1010 are coding units corresponding to coding depths determined by the video encoding apparatus 100, in a LCU. The prediction units 1060 are partitions of prediction units of each of the coding units 1010 corresponding to the coding depths, and the transformation units 1070 are transformation units of each of the coding units 1010 corresponding to the coding depths.

When a depth of a LCU is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some partitions 1014, 1016, 1022, 1032, 1048, 1050, 1052, and 1054 are obtained by splitting the coding units in the coding units 1010. In other words, partition types in the partitions 1014, 1022, 1050, and 1054 have a size of 2N×N, partition types in the partitions 1016, 1048, and 1052 have a size of N×2N, and a partition type of the partition 1032 has a size of N×N. Prediction units and partitions of the coding units 1010 are smaller than or equal to each coding unit.

Transformation or inverse transformation is performed on image data of a coding unit 1052 in the transformation units 1070 in a data unit that is smaller than the coding unit 1052. Also, transformation units 1014, 1016, 1022, 1032, 1048, 1050, and 1052 in the transformation units 1070 are different from those in the prediction units 1060 in terms of sizes or shapes. In other words, the video encoding and decoding apparatuses 100 and 200 may perform intra prediction/motion estimation/motion compensation and transformation/inverse transformation individually on a data unit in the same coding unit.

Accordingly, encoding is recursively performed on each of coding units having a hierarchical structure in each region of a LCU to determine an optimum coding unit, and thus coding units having a recursive tree structure may be obtained. Encoding information may include splitting information about a coding unit, information about a partition type, information about a prediction mode, and information about a size of a transformation unit. Table 5 shows encoding information that may be set by the video encoding and decoding apparatuses 100 and 200.

Table 1

| Splitting information 0 (Encoding on Coding Unit having Size of 2N×2N and Current Depth of d) | | | | | Splitting information 1 |
|---|---|---|---|---|---|
| Prediction Mode | Partition mode | | Size of Transformation Unit | | Repeatedly Encode Coding Units |
| Intra Inter | Symmetrical Partition mode | Asymmetrical Partition mode | Splitting information 0 of Transformation Unit | Splitting information 1 of Transformation Unit | having Lower Depth of d+1 |
| Skip (Only 2Nx2N) | 2N×2N 2N×N N×2N N×N | 2N×nU 2N×nD nL×2N nR×2N | 2N×2N | N×N (Symmetrical Type) N/2×N/2 (Asymmetrical Type) | |

The outputter 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Splitting information indicates whether a current coding unit is split into coding units of a lower depth. If splitting information of a current depth d is 0, since a depth, in which a current coding unit is no longer split into a lower depth, is a coding depth, and thus information about a partition type, prediction mode, and a size of a transformation unit may be defined for the coding depth. If the current coding unit is further split according to the splitting information, encoding is independently performed on four split coding units of a lower depth.

A prediction mode may be one of an intra mode, an inter mode, and a skip mode. The intra mode and the inter mode may be defined in all partition modes, and the skip mode is defined only in a partition type having a size of 2N×2N.

The information about the partition type may indicate symmetrical partition types having sizes of 2N×2N, 2N×N, N×2N, and N×N, which are obtained by symmetrically splitting a height or a width of a prediction unit, and asymmetrical partition types having sizes of 2N×nU, 2N×nD, nL×2N, and nR×2N, which are obtained by asymmetrically splitting the height or width of the prediction unit. The asymmetrical partition types having the sizes of 2N×nU and 2N×nD may be respectively obtained by splitting the height of the prediction unit in 1:3 and 3:1, and the asymmetrical partition modes having the sizes of nL×2N and nR×2N may be respectively obtained by splitting the width of the prediction unit in 1:3 and 3:1

The size of the transformation unit may be set to be two types in the intra mode and two types in the inter mode. In other words, if splitting information of the transformation unit is 0, the size of the transformation unit may be 2N×2N, which is the size of the current coding unit. If splitting information of the transformation unit is 1, the transformation units may be obtained by splitting the current coding unit. Also, if a partition type of the current coding unit having the size of 2N×2N is a symmetrical partition type, a size of a transformation unit may be set to N×N, and if the partition type of the current coding unit is an asymmetrical partition mode, the size of the transformation unit may be set to N/2×N/2.

The encoding information of coding units having a tree structure may be allocated for at least one of a coding unit corresponding to a coding depth, a prediction unit, and a minimum unit. The coding unit corresponding to the coding depth may include at least one prediction unit and at least one minimum unit that contain the same encoding information.

Accordingly, it is determined whether adjacent data units are included in the same coding unit corresponding to the coding depth by comparing encoding information of the adjacent data units. Also, a corresponding coding unit corresponding to a coding depth is determined by using encoding information of a data unit, and thus a distribution of coding depths in a LCU may be inferred.

Accordingly, if a current coding unit is predicted based on adjacent data units, encoding information of data units in deeper coding units adjacent to the current coding unit may be directly referred to and used.

Alternatively, if a current coding unit is predicted based on adjacent coding units, data adjacent to the current coding unit are searched fro from deeper coding units by using encoding information of deeper coding units adjacent to the current coding unit, and the adjacent coding units may be referred to for predicting the current coding unit.

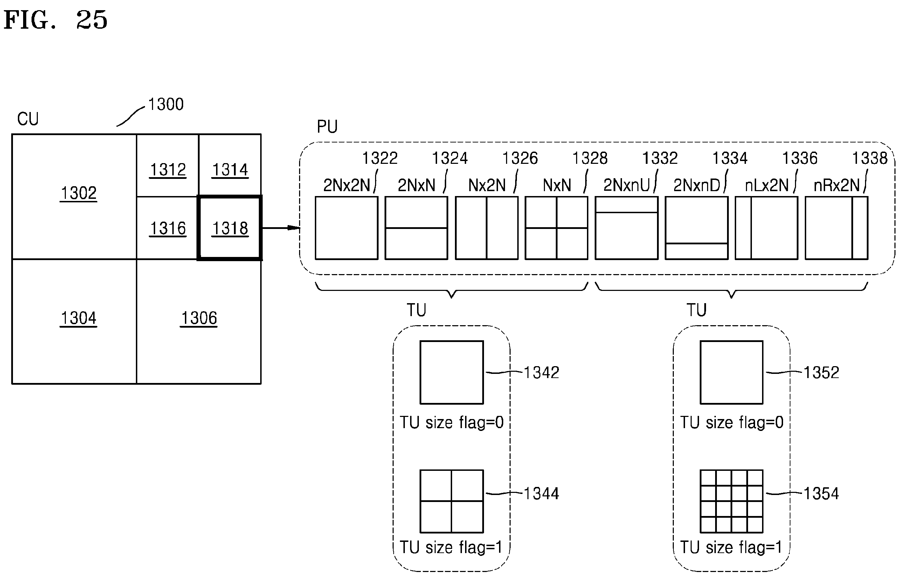

FIG. 25 is a diagram for describing a relationship between a coding unit, a prediction unit, and a transformation unit, according to encoding mode information of Table 5.

A LCU 1300 includes coding units 1302, 1304, 1306, 1312, 1314, 1316, and 1318 of coding depths. Here, since the coding unit 1318 is a coding unit of a coding depth, splitting information may be set to 0. Information about a partition type of the coding unit 1318 having a size of 2N×2N may be set to be one of a partition type 1322 having a size of 2N×2N, a partition type 1324 having a size of 2N×N, a partition type 1326 having a size of N×2N, a partition type 1328 having a size of N×N, a partition type 1332 having a size of 2N×nU, a partition type 1334 having a size of 2N×nD, a partition type 1336 having a size of nL×2N, and a partition type 1338 having a size of nR×2N.

Splitting information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2N×2N is set if a TU size flag of a transformation unit is 0, and a transformation unit 1344 having a size of N×N is set if a TU size flag is 1.

When the partition mode is set to be asymmetrical, i.e., the partition type 1332, 1334, 1336, or 1338, a transformation unit 1352 having a size of 2N×2N is set if a TU size flag is 0, and a transformation unit 1354 having a size of N/2×N/2 is set if a TU size flag is 1.

Referring to FIG. 25, the TU size flag is a flag having a value or 0 or 1, but the TU size flag is not limited to 1 bit, and a transformation unit may be hierarchically split while the TU size flag increases from 0. Splitting information (TU size flag) of a transformation unit may be an example of a transformation index.

In this case, the size of a transformation unit that has been actually used may be expressed by using a TU size flag of a transformation unit, according to one or more embodiments, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64×64 and a maximum transformation unit size is 32×32, (a-1) then the size of a transformation unit may be 32×32 when a TU size flag is 0, (a-2) may be 16×16 when the TU size flag is 1, and (a-3) may be 8×8 when the TU size flag is 2.

As another example, (b) if the size of the current coding unit is 32×32 and a minimum transformation unit size is 32×32, (b-1) then the size of the transformation unit may be 32×32 when the TU size flag is 0. Here, the TU size flag cannot be set to a value other than 0, since the size of the transformation unit cannot be less than 32×32.

As another example, (c) if the size of the current coding unit is 64×64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max (\text{MinTransformSize}, \text{RootTuSize}/(2^{\text{MaxTransformSizeIndex}})) \ ... \ (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to one or more embodiments, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \ ......... \ (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \ ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the embodiments are not limited thereto.

The LCU including coding units having a tree structure described above with reference to FIGS. 13-25 is referred to as any of various names such as a coding block tree, a block tree, a root block tree, a coding tree, a coding route, or a tree trunk.

The present invention can be embodied as computer readable codes on a computer readable recording medium. The computer readable recording medium is any type of recording device that stores data which can thereafter be read by a computer system. Examples of the computer-readable recording medium include ROM, RAM, CD-ROMs, magnetic tapes, floppy discs, and optical data storage media. The computer readable recording medium can also be distributed over network coupled computer systems so that the computer readable code is stored and executed in a distributive manner.

While the present invention has been particularly shown and described with reference to embodiments thereof, it will be understood that various changes in form and details may be made therein without departing from the spirit and scope of the following claims.

**EP 2 983 364 A1**

**Claims**

1. An image decoding method of decoding a multi-layer video, the method comprising:

    obtaining a layer identifier (ID) of at least one decoding-target layer image from a multi-layer video bitstream;
    obtaining, from the bitstream, a flag indicating whether scalability information has been included in the layer ID;
    obtaining at least one type of scalability information from among a plurality of different types of scalability information from the layer ID as the flag represents that a plurality of pieces of scalability information are obtained from the layer ID; and
    restoring an image by decoding the decoding-target layer image by using the scalability information.

2. The image decoding method of claim 1, wherein
    the decoding-target layer image comprises a plurality of pieces of scalability information, and
    an expression of the layer ID comprises, as a portion of the expression, dimension IDs representing scalability dimensions for a plurality of scalability types.

3. The image decoding method of claim 1, wherein
    the decoding-target layer image comprises a plurality of pieces of scalability information, and
    the plurality of pieces of scalability information are continued as ID parts in a binary form and included in a binary expression of the layer ID.

4. The image decoding method of claim 1, wherein the obtaining of the scalability information comprises:

    obtaining, from the bitstream, a syntax indicating the number of types of scalability information included in the layer ID; and
    obtaining scalability information of the decoding-target layer image from the layer ID by using the syntax indicating the number of types.

5. The image decoding method of claim 1, wherein the obtaining of the scalability information comprises:

    obtaining, from the bitstream, a syntax indicating a bit length by which scalability information included in the layer ID occupies a binary expression of the layer ID; and
    obtaining scalability information of the decoding-target layer image from the layer ID by using the syntax indicating the bit length.

6. The image decoding method of claim 5, wherein a length of scalability information included in the last order in the layer ID is determined by using a length of the layer ID and lengths of pieces of scalability information except for the scalability information included in the last order in the layer ID from among pieces of scalability information included in the layer ID.

7. The image decoding method of claim 1, wherein the obtaining of the scalability information comprises:

    obtaining a scalability information collection generated according to a scalability information type of the at least one decoding-target layer image and ID parts of the layer ID of the at least one decoding-target coding image, according to the value of a flag representing whether the scalability information collection is included in the bitstream; and
    obtaining scalability information of the decoding-target layer image by using the scalability information collection.

8. An image coding method of coding a multi-layer video, the method comprising:

    coding image data to a multi-layer coding image;
    generating at least one type of scalability information from among different types of scalability information for at least one coding-target layer image from the multi-layer coding image;
    generating a layer ID of the coding-target layer image by using the scalability information;
    obtaining, from the bitstream, a flag indicating whether scalability information has been included in the layer ID; and
    generating a bitstream including the layer ID and the flag.

9.  The image coding method of claim 8, wherein the generating of the layer ID of the coding-target layer image by using the scalability information comprises generating the layer ID such that an expression of a value of the layer ID includes a value of the scalability information as a portion of the expression.

10. The image coding method of claim 9, wherein the generating of the layer ID comprises generating a syntax indicating a bit length by which scalability information included in the layer ID occupies a binary expression of the layer ID.

11. The image coding method of claim 10, wherein
    a plurality of scalability information are sequentially included in the layer ID, and
    an indicator indicating the bit length does not indicate a bit length for scalability information included in the last order in the layer ID.

12. The image coding method of claim 8, wherein the bitstream further comprises a scalability information collection of the at least one coding-target layer image that is generated according to scalability information types included in the at least one coding-target layer image and ID parts of the layer ID of the at least one coding-target layer image, and further comprises a flag representing that the scalability information collection is included in the bitstream.

13. An image decoding apparatus for decoding a multi-layer video, the apparatus comprising:

    a receiver configured to receive a multi-layer video bitstream; and
    a decoder configured to, as a flag indicating whether scalability information has been included in a layer ID of at least one coding-target layer image, which is obtained from the bitstream, represents that a plurality of pieces of scalability information are obtained from the layer ID, decode the decoding-target layer image by using at least one type of scalability information from among a plurality of different types of scalability information, which is obtained from the layer ID, to thereby restore an image.

14. An image coding apparatus for coding a multi-layer video, the apparatus comprising:

    a coder configured to generate at least one type of scalability information from among different types of scalability information for at least one coding-target layer image from a multi-layer coding image, generate a layer ID of the coding-target layer image by using the scalability information, generate a flag indicating whether scalability information has been included in the layer ID, and code image data into the multi-layer coding image; and
    an outputter configured to generate a bitstream including the layer ID and the flag.

15. A computer-readable recording medium having recorded thereon a program for executing the method of claim 1.

# FIG. 1

VIDEO CODING LAYER

VIDEO CODER 11

10

NETWORK ABSTRACTION LAYER

OUTPUTTER 12 → NAL UNIT

FIG. 2

FIRST LAYER

SECOND LAYER

n-TH LAYER

# FIG. 3

## FIG. 4A

| nal_unit_header( ) { | Descriptor |
|---|---|
|    forbidden_zero_bit | f(1) |
|    nal_unit_type | u(6) |
|    reserved_zero_6bits | u(6) |
|    temporal_id | u(3) |
| } | |

FIG. 4B

| 41 | 42 | | | | | | | 43 | | | | | | 44 | | |
|----|---|---|---|---|---|---|---|---|---|---|---|---|---|---|---|---|
| 0 | 1 | 2 | 3 | 4 | 5 | 6 | 7 | 0 | 1 | 2 | 3 | 4 | 5 | 6 | 7 |
| F | NUT | | | | | | | Reserved | | | | | | TID | | |

FIG. 5

| 41 | | | 42 | | | | | | 51 | | | 52 | | | 44 | | |
|----|----|----|----|----|----|----|----|----|----|----|----|----|----|----|----|----|----|
| 0  | 1  | 2  | 3  | 4  | 5  | 6  | 7  | 0  | 1  | 2  | 3  | 4  | 5  | 6  | 7  |
| F  | NUT | | | | | | Reserved | | | | | | TID | | |

FIG. 6

| 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|
| F | NUT | | | | | | | Reserved | | | | | | TID | |

## FIG. 7

| 72 | | 71 | | | | | | | |
|---|---|---|---|---|---|---|---|---|---|
| | 1 | 2 | 3 | 4 | 5 | 6 | 7 | 8 |
| 0 (Temporal ID) | 0 | 0 | 0 | 0 | 0 | 0 | 0 | 1 |
| 1 (View ID) | 0 | 0 | 0 | 0 | 0 | 0 | 1 | 1 |
| 2 (Quality ID) | 0 | 0 | 0 | 0 | 1 | 0 | 0 | 0 |

FIG. 8

| LAYER ID | Quality ID | View ID | Temporal ID |
|----------|-----------|---------|-------------|
| 1 | 0 | 0 | 0 |
| 2 | 0 | 0 | 0 |
| 3 | 0 | 0 | 0 |
| 4 | 0 | 0 | 0 |
| 5 | 1 | 0 | 0 |
| 6 | 0 | 0 | 0 |
| 7 | 0 | 1 | 0 |
| 8 | 0 | 1 | 1 |

81

## FIG. 9

```
         ( START )
             │
             ▼
┌─────────────────────────────────────────────────┐
│  CODE IMAGE DATA TO MULTI-LAYER CODING IMAGE     │──S910
└─────────────────────────────────────────────────┘
             │
             ▼
┌─────────────────────────────────────────────────┐
│  GENERATE AT LEAST ONE TYPE OF SCALABILITY       │
│  INFORMATION FROM AMONG DIFFERENT TYPES OF       │──S920
│  SCALABILITY INFORMATION FOR AT LEAST ONE        │
│  CODING-TARGET LAYER IMAGE FROM                  │
│  MULTI-LAYER CODING IMAGE                        │
└─────────────────────────────────────────────────┘
             │
             ▼
┌─────────────────────────────────────────────────┐
│  GENERATE LAYER ID OF CODING-TARGET LAYER        │
│  IMAGE BY USING SCALABILITY INFORMATION          │──S930
└─────────────────────────────────────────────────┘
             │
             ▼
┌─────────────────────────────────────────────────┐
│  GENERATE FLAG INDICATING WHETHER SCALABILITY    │
│  INFORMATION HAS BEEN INCLUDED IN LAYER ID       │──S940
└─────────────────────────────────────────────────┘
             │
             ▼
┌─────────────────────────────────────────────────┐
│  GENERATE BITSTREAM INCLUDING LAYER ID AND FLAG  │──S950
└─────────────────────────────────────────────────┘
             │
             ▼
          ( END )
```

FIG. 10

1100

1120

VIDEO CODING LAYER

VIDEO
DECODER

NETWORK ABSTRACTION LAYER

1110

RECEIVER ◄——— NAL UNIT

# FIG. 11

START

OBTAINS LAYER ID OF AT LEAST ONE DECODING-TARGET LAYER IMAGE FROM MULTI-LAYER VIDEO BITSTREAM —— S1110

OBTAIN, FROM BITSTREAM, FLAG INDICATING WHETHER SCALABILITY INFORMATION HAS BEEN INCLUDED IN LAYER ID —— S1120

OBTAIN AT LEAST ONE TYPE OF SCALABILITY INFORMATION FROM AMONG PLURALITY OF DIFFERENT TYPES OF SCALABILITY INFORMATION FROM LAYER ID AS FLAG REPRESENTS THAT PLURALITY OF PIECES OF SCALABILITY INFORMATION ARE OBTAINED FROM LAYER ID —— S1130

DECODE DECODING-TARGET LAYER IMAGE BY USING SCALABILITY INFORMATION TO RESTORE IMAGE —— S1140

END

# FIG. 12A

| vps_extension( ) { | Descriptor |
|---|---|
| while( !byte_aligned( ) ) | |
| vps_extension_byte_alignment_reserved_one_bit | u(1) |
| avc_base_layer_flag | u(1) |
| splitting_flag | u(1) |
| for( i = 0, NumScalabilityTypes = 0; i < 16; i++ ) { | |
| scalability_mask[ i ] | u(1) |
| NumScalabilityTypes += scalability_mask[ i ] | |
| } | |
| for( i = 0;i <NumScalabilityTypes; i++ ) { | |
| if(i < NumScalabilityTypes−1) | |
| dimension_id_len_minus1[ i ] | u(3) |
| max_layers_scalability_dimension_minus1[ i ] | u(v) |
| } | |
| if(splitting_flag) { | |
| for( i = 1; i <= vps_max_layers_minus1; i++ ) { | |
| layer_id_in_nuh[ i ] ——1241 | u(6) |
| split_dimension_present_flag ——1242 | u(1) |
| if(split_dimension_present_flag) ——1243 | |
| for( i = 0;i <NumScalabilityTypes; i++ ) | |
| for( j = 1; j <= max _layers _scalability_dimension_minus1[ i ]; j++ ) | |
| split_dimension_id[ i ][ j ] ——1244 | u(v) |
| } else { | |
| vps_nuh_layer_id_present_flag | u(1) |
| for( i = 1; i <= vps_max_layers_minus1; i++ ) { | |
| if( vps_nuh_layer_id_present_flag ) | |
| layer_id_in_nuh[ i ] | u(6) |
| for( j = 0; j < NumScalabilityTypes; j++ ) | |
| dimension_id[ i ][ j ] | u(v) |
| } | |
| } | |

FIG. 12B

| | | |
|---|---|---|
| for( lsIdx = 1; lsIdx <= vps_num_layer_sets_minus1; lsIdx ++ ) { | | |
| 1260 | vps_profile_present_flag[ lsIdx ] | u(1) |
| | if( !vps_profile_present_flag[ lsIdx ] ) | |
| |    profile_layer_set_ref_minus1[ lsIdx ] | ue(v) |
| | profile_tier_level( vps_profile_present_flag[ lsIdx ], vps_max_sub_layers_minus1) | |
| } | | |
| num_output_layer_sets | | ue(v) |
| for( i = 0; i < num_output_layer_sets; i++ ) { | | |
| 1270 | output_layer_set_idx[ i ] | ue(v) |
| | lsIdx = output_layer_set_idx[ i ] | |
| | for( j = 0 ; j <= vps_max_layer_id; j++) | |
| | if( layer_id_included_flag[ lsIdx ][ j ] ) | |
| | output_layer_flag[ lsIdx ][ j ] | u(1) |
| } | | |
| for( i = 1; i <= vps_max_layers_minus1; i++ ) | | |
| 1280 | for( j = 0; j < i; j++ ) | |
| | direct_dependency_flag[ i ][ j ] | u(1) |
| } | | |

FIG. 13

100

110

LCU
SPLITTER

120

CODING UNIT
DETERMINER

130

OUTPUTTER

FIG. 14

# FIG. 15

RESOLUTION:1920×1080
MAXIMUM SIZE OF
CODING UNIT:64
MAXIMUM DEPTH=2

315

64
64 | 64×64

64
32 | 64×32

32
64 | 32×64

32
32 | 32×32

32
32 | 32×32

32
16 | 32×16

16
32 | 16×32

16
16 | 16×16

—310

RESOLUTION:1920×1080
MAXIMUM SIZE OF
CODING UNIT:64
MAXIMUM DEPTH=3

16
16 | 16×16

16
8 | 16×8

8
16 | 8×16

8
8 | 8×8

—320

RESOLUTION:352×288
MAXIMUM SIZE OF
CODING UNIT:16
MAXIMUM DEPTH=1

8
8 | 8×8

8
4 | 8×4

4
8 | 4×8

4
4 | 4×4

—330

335  325

# FIG. 16

EP 2 983 364 A1

# FIG. 17

BITSTREAM

ENTROPY
DECODER

505

515

500

530          535

RECONSTRUCTED
PICTURE BUFFER

INTER
PREDICTOR

540

INTRA
PREDICTOR

OUTPUT VIDEO

SAO
PERFORMER

DEBLOCKER

550          545

INVERSE
TRANSFORMER

DEQUANTIZER

525          520

EP 2 983 364 A1

# FIG. 18

LCU

MAXIMUM HEIGHT AND
MAXIMUM WIDTH OF
CODING UNIT=64    MAXIMUM DEPTH=3

600

| 64 | 610 | 64 | 612 | 32 | 614 | 32 | 616 |
64  64×64 | 32  64×32 | 64  32×64 | 32  32×32 |

| 32 | 620 | 32 | 622 | 16 | 624 | 16 | 626 |
32  32×32 | 16  32×16 | 32  16×32 | 16  16×16 |

| 16 | 630 | 16 | 632 | 8 | 634 | 8 | 636 |
16  16×16 | 8  16×8 | 16  8×16 | 8  8×8 |

| 8 | 640 | 8 | 642 | 4 | 644 | 4 | 646 |
8  8×8 | 4  8×4 | 8  4×8 | 4  4×4 |

SCU

PREDICTION
UNIT/
PARTITION

DEEPER CODING UNIT

FIG. 19

CODING UNIT (710)
64

TRANSFORMATION
UNIT (720)
32

32

64×64

32×32

# FIG. 20

PARTITION TYPE (800)

| 2N /802 | 2N /804 | N /806 | N /808 |
|---------|---------|--------|--------|

2N
2N

N
2N
0
1

2N
0 | 1

N
0 | 1
2 | 3

PREDICTION MODE (810)

/812
INTRA MODE

/814
INTER MODE

/816
SKIP MODE

SIZE OF TRANSFORMATION UNIT (820)

/822  /824
INTRA

/826  /828
INTER

FIG. 21

DEPTH0

2N_0

| | |
|---|---|
| 2N_0 | CU_0 |

900

910  SPLIT (920)

| 2N_0 | 2N_0 | N_0 | N_0 |
|---|---|---|---|

| | N_0 | 0 | | 2N_0 | 0 | 1 | | N_0 | 0 | 1 | | | 0 | 1 |
| 2N_0 | | 1 | | | | | | | 2 | 3 | | | 2 | 3 |

912   914   916   918

930

DEPTH=1

2N_1

| | |
|---|---|
| 2N_1 | CU_1 |

930

940  SPLIT (950)

| 2N_1 | 2N_1 | N_1 | N_1 |

| | N_1 | 0 | | 2N_1 | 0 | 1 | | N_1 | 0 | 1 | | | 0 | 1 |
| 2N_1 | | 1 | | | | | | | 2 | 3 | | | 2 | 3 |

942   944   946   948

960

SPLIT (970)

DEPTH=d-1

2N_(d-1)

| | |
|---|---|
| 2N_(d-1) | CU_(d-1) |

980

990

| 2N_(d-1) | 2N_(d-1) | N_(d-1) | N_(d-1) |

| | N_(d-1) | 0 | | 2N_(d-1) | 0 | 1 | | N_(d-1) | 0 | 1 |
| 2N_(d-1) | | 1 | | | | | | | 2 | 3 |

992   994   996   998

2N_d

| | |
|---|---|
| 2N_d | |

999

EP 2 983 364 A1

# FIG. 22

CODING UNIT (1010)

FIG. 23

PREDICTION UNIT (1060)

FIG. 24

1014 — 1016 — 1022 — 1032 — 1048 — 1054 — 1050 — 1052 — TRANSFORMATION UNIT (1070)

**FIG. 25**

CU 1300

1302 1304 1306
1312 1314
1316 1318

PU

2Nx2N 1322
2NxN 1324
Nx2N 1326
NxN 1328
2NxnU 1332
2NxnD 1334
nLx2N 1336
nRx2N 1338

TU

TU size flag=0 1342
TU size flag=1 1344

TU

TU size flag=0 1352
TU size flag=1 1354

## INTERNATIONAL SEARCH REPORT

| International application No. |
|---|
| **PCT/KR2014/003008** |

**A.    CLASSIFICATION OF SUBJECT MATTER**

*H04N 19/30(2014.01)i*

According to International Patent Classification (IPC) or to both national classification and IPC

**B.    FIELDS SEARCHED**

Minimum documentation searched (classification system followed by classification symbols)
H04N 19/30; H04N 7/24; H04N 7/015; H04N 11/04; H04N 7/26; H04B 1/66; H04N 7/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multilayer, layer identifier, scalability type, flag, decoding, code.

**C.    DOCUMENTS CONSIDERED TO BE RELEVANT**

| Category* | Citation of document, with indication, where appropriate, of the relevant passages | Relevant to claim No. |
|---|---|---|
| Y | US 2012-0269276 A1 (HONG, Danny et al.) 25 October 2012 See paragraphs [0025]-[0026], [0054]-[0086]; figures 4-10; and claims 1-2, 11-12. | 1-3,8,13-15 |
| A | | 4-7,9-12 |
| Y | KR 10-2012-0015260 A (ELECTRONICS AND TELECOMMUNICATIONS RESEARCH INSTITUTE et al.) 21 February 2012 | 1-3,8,13-15 |
| A | See paragraphs [0060]-[0080]; figures 3-4; and claims 1, 5, 7. | 4-7,9-12 |
| A | US 2006-0256851 A1 (WANG, Ye-Kui et al.) 16 November 2006 See paragraphs [0011], [0034]-[0040]; and figures 2-5. | 1-15 |
| A | KR 10-2009-0004653 A (LG ELECTRONICS INC.) 12 January 2009 See paragraphs [0961]-[1007]; figures 75-77; and claim 1. | 1-15 |
| A | WO 2011-015965 A1 (NOKIA CORPORATION) 10 February 2011 See paragraphs [0053]-[0054]; figure 8; and claims 1-6. | 1-15 |

☐  Further documents are listed in the continuation of Box C.        ☒  See patent family annex.

| | |
|---|---|
| \*      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 08 JULY 2014 (08.07.2014) | **08 JULY 2014 (08.07.2014)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/003008**

| Patent document cited in search report | Publication date | Patent family member | Publication date |
|---|---|---|---|
| US 2012-0269276 A1 | 25/10/2012 | AU 2012-205650 A1 | 01/08/2013 |
| | | CA 2824741 A1 | 19/07/2012 |
| | | CN 103416003 A | 27/11/2013 |
| | | EP 2664075 A1 | 20/11/2013 |
| | | JP 2014-504118 A | 13/02/2014 |
| | | US 2012-0183077 A1 | 19/07/2012 |
| | | US 2012-0275517 A1 | 01/11/2012 |
| | | US 8649441 B2 | 11/02/2014 |
| | | WO 2012-096981 A1 | 19/07/2012 |
| | | WO 2013-106521 A2 | 18/07/2013 |
| KR 10-2012-0015260 A | 21/02/2012 | US 2013-0212291 A1 | 15/08/2013 |
| | | WO 2012-011732 A2 | 26/01/2012 |
| | | WO 2012-011732 A3 | 19/04/2012 |
| US 2006-0256851 A1 | 16/11/2006 | CA 2604203 A1 | 19/10/2006 |
| | | CN 101120593 A | 06/02/2008 |
| | | EP 1869891 A1 | 26/12/2007 |
| | | JP 2008-536420 A | 04/09/2008 |
| | | KR 10-2008-0006609 A | 16/01/2008 |
| | | MX 2007012564 A | 15/11/2007 |
| | | RU 2007141755 A | 20/05/2009 |
| | | RU 2377736 C2 | 27/12/2009 |
| | | WO 2006-108917 A1 | 19/10/2006 |
| KR 10-2009-0004653 A | 12/01/2009 | KR 10-0904447 B1 | 26/06/2009 |
| | | KR 10-2009-0014240 A | 06/02/2009 |
| WO 2011-015965 A1 | 10/02/2011 | NONE | |

Form PCT/ISA/210 (patent family annex) (July 2009)